# EUROPEAN PATENT APPLICATION

(11) **EP 4 495 871 A1**
(43) Date of publication of application: **22.01.2025**
(21) Application number: 22932145.0
(22) Date of filing: 18.03.2022
(51) Int. Cl.: G06Q 50/04

(54) **INFORMATION PROCESSING DEVICE, INFORMATION PROCESSING METHOD, AND INFORMATION PROCESSING PROGRAM**

(71) Applicant: FUJITSU LIMITED, Kawasaki-shi, Kanagawa 211-8588 (JP)
(72) Inventor: NISHIMAKI, Satoru, Kawasaki-shi, Kanagawa 211-8588 (JP)
(74) Representative: Hoffmann Eitle
(86) International application number: PCT/JP2022/012489
(87) International publication number: WO 2023/175872

(57) **Abstract**

A manufacturer-side management device registers a contribution value calculation SC (603) in an SC store (630) of a distributed ledger. A supplier-side management device registers trail data in a trail data store (610) of the distributed ledger. The manufacturer-side management device registers a token in a token data store (620) of the distributed ledger. Various devices to be nodes calculate a consideration ratio representing a ratio at which a consideration is distributed to each participant, using the contribution value calculation SC (603) and a consideration ratio calculation SC (601), in response to a calculation request. For example, the consideration ratio calculation SC (601) specifies the contribution value calculation SC (603) corresponding to Data Type included in the trail data, based on the token and inputs an actual value. For example, the consideration ratio calculation SC (601) calculates a consideration ratio, based on a contribution value obtained by converting the actual value for each trail data.

## Description

### TECHNICAL FIELD

The present invention relates to an information processing device, an information processing method, an information processing program.

### BACKGROUND ART

Typically, there is a system called a supply chain that shares a plurality of processes of manufacturing and distributing products by a plurality of participants. Here, when the product is manufactured or distributed, reduction of a CO₂ emission amount or the like is desired. For example, it is considered to promote the reduction of the CO₂ emission amount of each participant, by distributing a profit obtained by the product to each participant, according to a contribution degree to the reduction of the CO₂ emission amount of each participant.

For example, there is related art that executes a first smart contract for managing a transaction processing history by a distributed ledger and executes a second smart contract for calculating a contribution degree to a management target system by each of a plurality of organizations, based on the processing history. Furthermore, for example, there is a technique for updating the smart contract without impairing invariance of data to be base, by a master-slave model of the smart contract. Furthermore, for example, there is a technique for uploading an extended smart contract of an original smart contract to a block chain network. Furthermore, for example, there is a technique for determining a carbon emission reduction equivalent corresponding to carbon behavior data, based on an initial smart contract that matches the carbon behavior data and an attribute.

### CITATION LIST

### PATENT DOCUMENT

Patent Document 1: Japanese Laid-open Patent Publication No. 2019-200556
Patent Document 2: Japanese National Publication of International Patent Application No. 2021-520169
Patent Document 3: U.S. Patent Application Publication No. 2021/0149880
Patent Document 4: U.S. Patent Application Publication No. 2021/0248694

### SUMMARY OF INVENTION

### TECHNICAL PROBLEM

However, with the related art, there is a case where it is difficult to appropriately distribute a profit to each participant. For example, a method is considered for distributing the profit to each participant, using a smart contract in a block chain network formed by a node of each participant. With this method, it is difficult to appropriately distribute the profit to each participant, in consideration of a variation in a contribution degree of each participant.

According to one aspect, an object of the present invention is to facilitate appropriate distribution of a profit to a plurality of participants.

### SOLUTION TO PROBLEM

According to one embodiment, an information processing device, of a plurality of the information processing devices, that corresponds to any one of a plurality of processes regarding a source of a profit, that manages a distributed ledger, stores a first smart contract that converts an actual value in the process regarding a purpose into an index value that indicates a contribution degree to the purpose, based on a unified criterion in the plurality of processes, according to a record type of the actual value, for each of the plurality of processes, stores a second smart contract that calculates a ratio at which the profit obtained from the source is distributed to a plurality of participants that shares the plurality of processes, based on the index value, registers first trail data that indicates a correspondence relationship between the any one process, the actual value in the process regarding the purpose, and the record type of the actual value, in the distributed ledger, calculates the index value regarding the process, according to the record type of the actual value in the process regarding the purpose, by using the first smart contract that corresponds to each process, based on a token that indicates a correspondence relationship between the source and trail data registered in the distributed ledger for each process, with reference to the distributed ledger, and calculates a ratio at which the profit obtained from the source is distributed to the plurality of participants, according to the calculated index value regarding each process, by using the second smart contract, an information processing method, and an information processing program are proposed.

### ADVANTAGEOUS EFFECTS OF INVENTION

According to one aspect, it is possible to facilitate appropriate distribution of a profit to a plurality of participants.

### BRIEF DESCRIPTION OF DRAWINGS

FIG. 1 is an explanatory diagram illustrating an example of an information processing method according to an embodiment.
FIG. 2 is an explanatory diagram illustrating an example of an information processing system 200.
FIG. 3 is a block diagram illustrating a hardware configuration example of a computer 300.
FIG. 4 is a block diagram illustrating a functional configuration example of an information processing device 100.
FIG. 5 is a block diagram illustrating a functional configuration example of the information processing system 200.
FIG. 6 is an explanatory diagram illustrating a flow of an operation of the information processing system 200.
FIG. 7 is an explanatory diagram (part 1) illustrating a first operation example of the information processing system 200.
FIG. 8 is an explanatory diagram (part 2) illustrating the first operation example of the information processing system 200.
FIG. 9 is an explanatory diagram (part 3) illustrating the first operation example of the information processing system 200.
FIG. 10 is an explanatory diagram (part 4) illustrating the first operation example of the information processing system 200.
FIG. 11 is an explanatory diagram (part 5) illustrating the first operation example of the information processing system 200.
FIG. 12 is an explanatory diagram (part 6) illustrating the first operation example of the information processing system 200.
FIG. 13 is an explanatory diagram (part 7) illustrating the first operation example of the information processing system 200.
FIG. 14 is an explanatory diagram (part 8) illustrating the first operation example of the information processing system 200.
FIG. 15 is an explanatory diagram (part 9) illustrating the first operation example of the information processing system 200.
FIG. 16 is an explanatory diagram (part 10) illustrating the first operation example of the information processing system 200.
FIG. 17 is an explanatory diagram (part 11) illustrating the first operation example of the information processing system 200.
FIG. 18 is an explanatory diagram (part 12) illustrating the first operation example of the information processing system 200.
FIG. 19 is an explanatory diagram (part 13) illustrating the first operation example of the information processing system 200.
FIG. 20 is an explanatory diagram (part 14) illustrating the first operation example of the information processing system 200.
FIG. 21 is an explanatory diagram (part 15) illustrating the first operation example of the information processing system 200.
FIG. 22 is an explanatory diagram (part 16) illustrating the first operation example of the information processing system 200.
FIG. 23 is an explanatory diagram (part 17) illustrating the first operation example of the information processing system 200.
FIG. 24 is an explanatory diagram (part 18) illustrating the first operation example of the information processing system 200.
FIG. 25 is an explanatory diagram (part 1) illustrating a second operation example of the information processing system 200.
FIG. 26 is an explanatory diagram (part 2) illustrating the second operation example of the information processing system 200.
FIG. 27 is an explanatory diagram (part 3) illustrating the second operation example of the information processing system 200.
FIG. 28 is an explanatory diagram (part 4) illustrating the second operation example of the information processing system 200.
FIG. 29 is an explanatory diagram (part 5) illustrating the second operation example of the information processing system 200.
FIG. 30 is an explanatory diagram (part 6) illustrating the second operation example of the information processing system 200.
FIG. 31 is an explanatory diagram (part 7) illustrating the second operation example of the information processing system 200.
FIG. 32 is an explanatory diagram (part 8) illustrating the second operation example of the information processing system 200.
FIG. 33 is an explanatory diagram (part 9) illustrating the second operation example of the information processing system 200.
FIG. 34 is an explanatory diagram (part 1) illustrating a third operation example of the information processing system 200.
FIG. 35 is an explanatory diagram (part 2) illustrating the third operation example of the information processing system 200.
FIG. 36 is an explanatory diagram (part 3) illustrating the third operation example of the information processing system 200.
FIG. 37 is an explanatory diagram (part 4) illustrating the third operation example of the information processing system 200.
FIG. 38 is an explanatory diagram (part 5) illustrating the third operation example of the information processing system 200.
FIG. 39 is an explanatory diagram (part 6) illustrating the third operation example of the information processing system 200.
FIG. 40 is an explanatory diagram (part 7) illustrating the third operation example of the information processing system 200.
FIG. 41 is an explanatory diagram (part 8) illustrating the third operation example of the information processing system 200.
FIG. 42 is an explanatory diagram (part 9) illustrating the third operation example of the information processing system 200.
FIG. 43 is an explanatory diagram (part 10) illustrating the third operation example of the information processing system 200.
FIG. 44 is an explanatory diagram (part 11) illustrating the third operation example of the information processing system 200.
FIG. 45 is an explanatory diagram (part 12) illustrating the third operation example of the information processing system 200.
FIG. 46 is an explanatory diagram (part 1) illustrating a fourth operation example of the information processing system 200.
FIG. 47 is an explanatory diagram (part 2) illustrating the fourth operation example of the information processing system 200.
FIG. 48 is an explanatory diagram (part 3) illustrating the fourth operation example of the information processing system 200.
FIG. 49 is an explanatory diagram (part 4) illustrating the fourth operation example of the information processing system 200.

### DESCRIPTION OF EMBODIMENTS

Hereinafter, an embodiment of an information processing device, an information processing method, and an information processing program according to the present invention will be described in detail with reference to the drawings.

### (Example of Information Processing Method According to Embodiment)

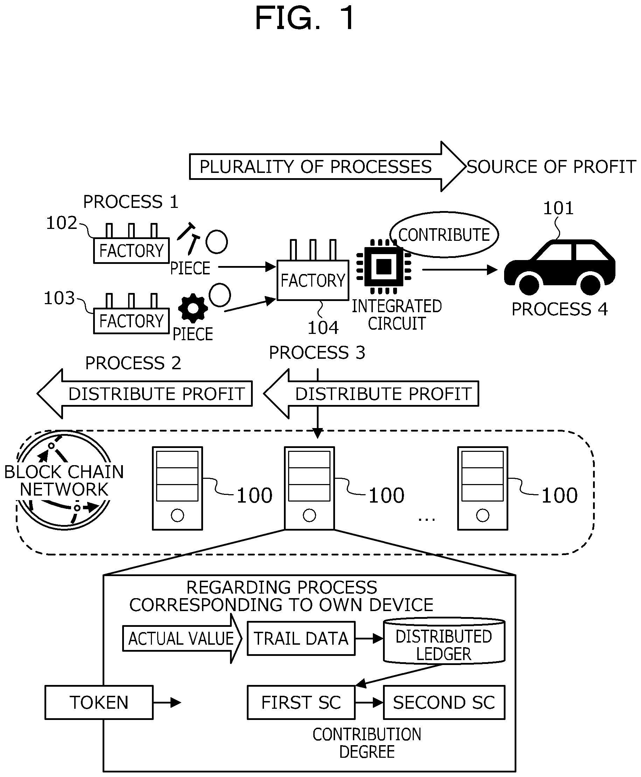

FIG. 1 is an explanatory diagram illustrating an example of an information processing method according to an embodiment. An information processing device 100 is a computer that serves as a node forming a block chain network (block chain network) and manages a distributed ledger. The distributed ledger is also referred to as a block chain (BC). The information processing device 100 is, for example, a server, a PC, or the like.

There is the plurality of information processing devices 100. Each of the information processing devices 100 corresponds to any one of a plurality of processes. The plurality of processes is a process that relates to a source of a profit. The source of the profit is, for example, products, services, or the like. The plurality of processes includes, for example, two or more processes for manufacturing a product. The plurality of processes may be, for example, two or more processes for providing services.

Typically, there is a system called a supply chain that shares a plurality of processes by a plurality of participants. Here, there is a case where it is desired to distribute a profit obtained by products to each participant, according to a contribution degree to a predetermined purpose of each participant. However, it is difficult to calculate a ratio of distributing the profit obtained by the profit to each participant. The predetermined purpose is, for example, environmental contribution. Specifically, the predetermined purpose is to reduce CO₂ emissions, reduce a fuel usage, reduce a power usage, reduce a plastic usage, or the like. Therefore, it is difficult to appropriately distribute the profit to each participant. As a result, it is difficult to promote the contribution to the predetermined purpose of each participant.

Furthermore, when various participants exist, there is a case where it is desired to securely calculate the ratio at which the profit is distributed to each participant. On the other hand, with reference to Reference Document 1 below, a method is considered for preparing a smart contract that distributes a profit to each participant at a fixed ratio, in a block chain network formed by a node of each participant.

Reference Document 1: "ERC-2571: Creators' Royalty Token standard", [online], March 29, 2020, [searched on February 22, 2022], Internet <URL :https://github.com/ethereum/EIPs/issues/2571>

However, with this method, it is not possible to sequentially evaluate the contribution degree to the predetermined purpose of each participant and to distribute the profit to each participant based on an evaluation result. Therefore, it is difficult to appropriately distribute the profit to each participant, in consideration of a variation in the contribution degree of each participant.

Another method obtained by modifying this method is considered for preparing a smart contract that evaluates the contribution degree to the predetermined purpose of each participant and calculates the ratio at which the profit is distributed to each participant based on the evaluation result, in a block chain network.

With this another method, it is difficult to cope with a change in a record type, an evaluation criterion of the contribution degree, or the like. For example, the smart contract needs to be rewritten, according to the change in the record type, the evaluation criterion of the contribution degree, or the like.

For example, without the consent of the plurality of participants, there is a case where rewriting of the smart contract is not allowed, and cost needed for rewriting the smart contract tends to increase. The cost is, for example, human, temporal, or monetary cost. Furthermore, it is not possible to generate the smart contract, in expectation of the change in the record type, the evaluation criterion of the contribution degree, or the like. Therefore, with this another method, it is difficult to appropriately distribute the profit to each participant.

Furthermore, there may be a policy that it is preferable that rewriting a smart contract is allowed only in a situation where all the participants are adversely affected, as in a case where a program defect is found and it is not preferable to allow the rewriting in a case of a function addition, or the like.

Therefore, in the present embodiment, an information processing method will be described that facilitates appropriate distribution of a profit to a plurality of participants. In the present embodiment, for example, even if the record type, the evaluation criterion of the contribution degree, or the like is changed, it is possible to facilitate the appropriate distribution of the profit to the plurality of participants. In the following description, the smart contract may be referred to as "SC".

In FIG. 1, the plurality of processes includes a process 1, a process 2, a process 3, and a process 4. The plurality of processes relates to the source of the profit. The profit is, for example, money. The source is, for example, a product 101. The process 1 is a process for manufacturing a piece of the product 101 in a factory 102. The process 2 is a process for manufacturing a piece of the product 101 in a factory 103. The process 3 is a process for manufacturing an integrated circuit to be a piece of the product 101 in a factory 104, using the piece manufactured in the process 1 and the piece manufactured in the process 2. The process 4 is a process for manufacturing the product 101 using the integrated circuit manufactured in the process 3. Here, in a case where the profit is obtained by the product 101, it is desirable to distribute the profit to each of the plurality of participants that shares the plurality of processes.

Each information processing device 100 corresponds to any one of the plurality of processes. Each information processing device 100 stores a first SC, for each of the plurality of processes. Each information processing device 100 stores, for example, the first SC by registering the first SC in a distributed ledger managed by the own device. The first SC has a function for converting an actual value in the process regarding a purpose into an index value indicating a contribution degree to the purpose, based on a unified criterion in the plurality of processes, according to a record type of the actual value, for any one process. The purpose is, for example, environmental contribution. Specifically, the purpose is to reduce CO₂ emissions, reduce a fuel usage, reduce a power usage, reduce a plastic usage, or the like.

The actual value is, for example, a measurement value in any one process, regarding the purpose. The measurement value is, for example, a fuel usage, a power usage, a plant-based raw material usage, or the like. The record type indicates, for example, whether or not the measurement value to be the actual value is a fuel usage, a power usage, a plant-based raw material usage, or the like. The index value is a contribution value indicating a contribution degree to a purpose. The contribution value may be the actual value. Specifically, the contribution value is a reduction amount of the CO₂ emission, a reduction amount of the fuel usage, a reduction amount of the power usage, a reduction amount of the plastic usage, or the like. The first SC is generated by any one of the information processing devices 100, included in a block, and registered in the distributed ledger managed by each information processing device 100.

Each information processing device 100 stores a second SC. Each information processing device 100 stores, for example, the second SC by registering the second SC in the distributed ledger managed by the own device. The second SC calculates a ratio of at which the profit obtained from the source is distributed to the plurality of participants sharing the plurality of processes, based on the index value. For example, the second SC has a function for calculating the ratio at which the profit obtained from the source is distributed to the plurality of participants sharing the plurality of processes, based on the index value regarding each process. The second SC is generated by any one of the information processing devices 100, included in a block, and registered in the distributed ledger managed by each information processing device 100.

(1-1) Each information processing device 100 registers first trail data indicating a correspondence relationship between a process corresponding to the own device, an actual value in the process regarding the purpose, and a record type of the actual value, in the distributed ledger managed by each information processing device 100. Each information processing device 100 measures the actual value in the process regarding the purpose, for example, in response to completion of the process corresponding to the own device. Each information processing device 100 registers, for example, the first trail data indicating the correspondence relationship between the process corresponding to the own device, the measured actual value in the process regarding the purpose, and the record type of the actual value, in the distributed ledger managed by each information processing device 100.

(1-2) Each information processing device 100 calculates the index value regarding the process, according to the record type of the actual value in the process regarding the purpose, using the first SC corresponding to each process, based on a token, with reference to the distributed ledger managed by the own device. The token indicates a correspondence relationship between a source and trail data registered in the distributed ledger for each process.

The token is generated by any one information processing device 100, included in the block, and registered in the distributed ledger managed by each information processing device 100. Specifically, it is considered that, after being generated by any one information processing device 100 corresponding to the final process 4, the token is included in the block, distributed to each information processing device 100, and registered in the distributed ledger managed by each information processing device 100.

Each information processing device 100 refers to the distributed ledger managed by the own device and specifies the first SC corresponding to each process, based on the token, for example, in response to the registration of the token in the distributed ledger managed by the own device. Each information processing device 100 calculates the index value regarding the process, according to the record type of the actual value in the process regarding the purpose, using the specified first SC, for each process.

(1-3) Each information processing device 100 calculates the ratio at which the profit obtained from the source is distributed to the plurality of participants, according to the calculated index value regarding each process, using the second SC. As a result, each information processing device 100 can calculate the ratio at which the profit is appropriately distributed to each participant, according to the contribution degree to the purpose of each participant. Therefore, each information processing device 100 can appropriately distribute the profit to each participant and facilitate the contribution to the purpose of each participant.

Furthermore, each information processing device 100 can make it easier to securely calculate the ratio at which the profit is distributed to each participant, even if various participants exist. Furthermore, each information processing device 100 can sequentially evaluate the contribution degree to a predetermined purpose of each participant, in consideration of the variation in the contribution degree of each participant, and can appropriately distribute the profit to each participant based on the evaluation result.

Furthermore, each information processing device 100 can form an information processing system that can easily cope with a change in the record type, the evaluation criterion of the contribution degree, or the like. Specifically, even if the record type, the evaluation criterion of the contribution degree, or the like changes, each information processing device 100 does not need to rewrite an existing first SC and an existing second SC. Specifically, each information processing device 100 can cope with the change in the record type, the evaluation criterion of the contribution degree, or the like, by registering a new first SC or the like in the distributed ledger managed by each information processing device 100. Therefore, each information processing device 100 can suppress an increase in cost.

### (Example of Information Processing System 200)

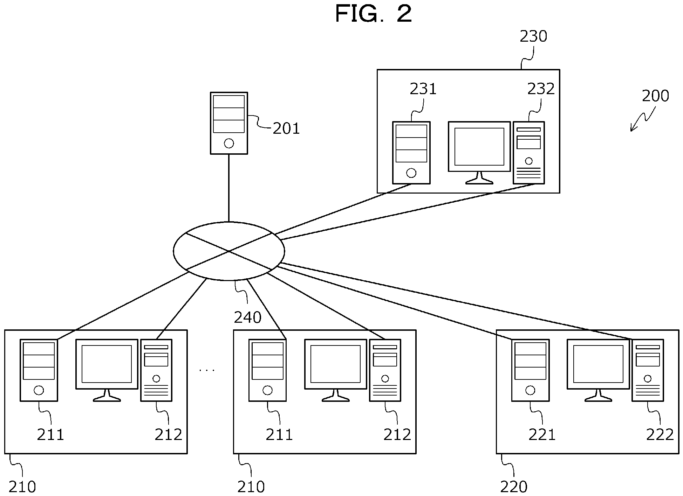

Next, an example of an information processing system 200, to which the information processing device 100 illustrated in FIG. 1 is applied, will be described with reference to FIG. 2.

FIG. 2 is an explanatory diagram illustrating an example of the information processing system 200. In FIG. 2, the information processing system 200 includes a plurality of supplier-side environments 210, a manufacturer-side environment 220, a purchaser-side environment 230, and a block generation device 201.

The supplier-side environment 210 corresponds to any one of the plurality of processes regarding the source of the profit. The supplier-side environment 210 includes a supplier-side management device 211 and a supplier-side terminal device 212. The manufacturer-side environment 220 corresponds to any one of the plurality of processes regarding the source of the profit. The manufacturer-side environment 220 corresponds to, for example, a final process of the plurality of processes. The manufacturer-side environment 220 includes a manufacturer-side management device 221 and a manufacturer-side terminal device 222. The purchaser-side environment 230 includes a purchaser-side management device 231 and a purchaser-side terminal device 232.

In the information processing system 200, the supplier-side management device 211 and the supplier-side terminal device 212 are coupled via a wired or wireless network 240. The network 240 is, for example, a local area network (LAN), a wide area network (WAN), the Internet, or the like. In the information processing system 200, the supplier-side management device 211 and the block generation device 201 are coupled via the wired or wireless network 240.

In the information processing system 200, the manufacturer-side management device 221 and the manufacturer-side terminal device 222 are coupled via the wired or wireless network 240. In the information processing system 200, the manufacturer-side management device 221 and the block generation device 201 are coupled via the wired or wireless network 240.

In the information processing system 200, the purchaser-side management device 231 and the purchaser-side terminal device 232 are coupled via the wired or wireless network 240. In the information processing system 200, the purchaser-side management device 231 and the block generation device 201 are coupled via the wired or wireless network 240.

The supplier-side management device 211 and the manufacturer-side management device 221 correspond to the information processing device 100 illustrated in FIG. 1. The supplier-side management device 211, the manufacturer-side management device 221, and the purchaser-side management device 231 are computers to be nodes forming the same block chain network. The supplier-side management device 211, the manufacturer-side management device 221, and the purchaser-side management device 231 store and manage the distributed ledger having the same content.

The supplier-side management device 211, the manufacturer-side management device 221, and the purchaser-side management device 231 include the first SC. The first SC has a function for converting the actual value in any one process regarding the purpose into the index value indicating the contribution degree to the purpose, indicated by the criterion unified in the plurality of processes, according to the record type of the actual value. The supplier-side management device 211, the manufacturer-side management device 221, and the purchaser-side management device 231 include the first SC by registering the first SC in the distributed ledger managed by each own device, for example.

The supplier-side management device 211, the manufacturer-side management device 221, and the purchaser-side management device 231 include the second SC. The second SC has a function for calculating a ratio at which the profit is distributed to the plurality of participants, based on the index value indicating the contribution degree to the purpose, regarding each of the plurality of processes. The supplier-side management device 211, the manufacturer-side management device 221, and the purchaser-side management device 231 include the second SC by registering the second SC, in the distributed ledger managed by each own device, for example.

The supplier-side management device 211 receives the trail data from the supplier-side terminal device 212. The trail data indicates a correspondence relationship between any one process, an actual value in the process regarding the purpose, and a record type of the actual value. The supplier-side management device 211 issues a transaction including the trail data and transmits the transaction to the block generation device 201. As a result, the supplier-side management device 211 can distribute a block including the trail data to the supplier-side management device 211, the manufacturer-side management device 221, and the purchaser-side management device 231.

Upon receiving the block including the trail data from the block generation device 201, the supplier-side management device 211 stores the block including the trail data in the distributed ledger managed by the own device. Upon receiving a block including the token from the block generation device 201, the supplier-side management device 211 stores the block including the token in the distributed ledger managed by the own device. The token indicates a correspondence relationship between the source of the profit and the trail data registered in the distributed ledger for each of the plurality of processes.

Upon receiving a block including the first SC from the block generation device 201, the supplier-side management device 211 stores the block including the first SC in the distributed ledger managed by the own device. Upon receiving a block including the second SC from the block generation device 201, the supplier-side management device 211 stores the block including the second SC in the distributed ledger managed by the own device.

Upon receiving a block including a calculation request from the block generation device 201, the supplier-side management device 211 stores the block including the calculation request in the distributed ledger managed by the own device. The calculation request requests to calculate a ratio at which a profit is distributed to a plurality of participants. The participant is a supplier, a manufacturer, or the like. The calculation request includes designation of the token.

In response to the calculation request, the supplier-side management device 211 calculates the index value indicating the contribution degree to the purpose, regarding each of the plurality of processes, using the first SC, based on the token. The supplier-side management device 211 calculates the ratio a t which the profit is distributed to the plurality of participants, based on the index value indicating the contribution degree to the purpose, regarding each of the plurality of processes, using the second SC, based on the token. The supplier-side management device 211 is, for example, a server, a PC, or the like.

The supplier-side terminal device 212 generates trail data indicating a correspondence relationship between a process corresponding to the own device, an actual value in the process regarding the purpose, and a record type of the actual value, based on an operation input of a user on the supplier side. The supplier-side terminal device 212 transmits the generated trail data to the supplier-side management device 211. The supplier-side terminal device 212 is, for example, a PC, a tablet terminal, a smartphone, or the like.

The manufacturer-side management device 221 receives the trail data from the manufacturer-side terminal device 222. The manufacturer-side management device 221 issues a transaction including the trail data and transmits the transaction to the block generation device 201. As a result, the manufacturer-side management device 221 can distribute the block including the trail data to the supplier-side management device 211, the manufacturer-side management device 221, and the purchaser-side management device 231.

The manufacturer-side management device 221 receives the token from the manufacturer-side terminal device 222. The manufacturer-side management device 221 issues the transaction including the token and transmits the transaction to the block generation device 201. As a result, the manufacturer-side management device 221 can distribute the block including the token to the supplier-side management device 211, the manufacturer-side management device 221, and the purchaser-side management device 231.

The manufacturer-side management device 221 receives the first SC from the manufacturer-side terminal device 222. The manufacturer-side management device 221 issues a transaction including the first SC and transmits the transaction to the block generation device 201. As a result, the manufacturer-side management device 221 can distribute the block including the first SC to the supplier-side management device 211, the manufacturer-side management device 221, and the purchaser-side management device 231.

The manufacturer-side management device 221 receives the second SC from the manufacturer-side terminal device 222. The manufacturer-side management device 221 issues a transaction including the second SC and transmits the transaction to the block generation device 201. As a result, the manufacturer-side management device 221 can distribute the block including the second SC to the supplier-side management device 211, the manufacturer-side management device 221, and the purchaser-side management device 231.

Upon receiving the block including the trail data from the block generation device 201, the manufacturer-side management device 221 stores the block including the trail data in the distributed ledger managed by the own device. Upon receiving the block including the token from the block generation device 201, the manufacturer-side management device 221 stores the block including the token in the distributed ledger managed by the own device.

Upon receiving the block including the first SC from the block generation device 201, the manufacturer-side management device 221 stores the block including the first SC in the distributed ledger managed by the own device. Upon receiving the block including the second SC from the block generation device 201, the manufacturer-side management device 221 stores the block including the second SC in the distributed ledger managed by the own device.

Upon receiving the block including the calculation request from the block generation device 201, the manufacturer-side management device 221 stores the block including the calculation request in the distributed ledger managed by the own device. The calculation request requests to calculate a ratio at which a profit is distributed to a plurality of participants. The participant is a supplier, a manufacturer, or the like. The participant does not need to include the manufacturer, for example. The calculation request includes designation of the token.

In response to the calculation request, the manufacturer-side management device 221 calculates the index value indicating the contribution degree to the purpose, regarding each of the plurality of processes, using the first SC, based on the token. The manufacturer-side management device 221 calculates the ratio at which the profit is distributed to the plurality of participants, based on the index value indicating the contribution degree to the purpose, regarding each of the plurality of processes, using the second SC, based on the token. The manufacturer-side management device 221 is, for example, a server, a PC, or the like.

The manufacturer-side terminal device 222 generates trail data indicating a correspondence relationship between a process corresponding to the own device, an actual value in the process regarding the purpose, and a record type of the actual value, based on an operation input of the user on the manufacturer side. The manufacturer-side terminal device 222 transmits the generated trail data to the manufacturer-side management device 221. The manufacturer-side terminal device 222 generates the token, based on the operation input of the user on the manufacturer side. The manufacturer-side terminal device 222 transmits the generated token to the manufacturer-side management device 221.

The manufacturer-side terminal device 222 generates the first SC, based on the operation input of the user on the manufacturer side. The manufacturer-side terminal device 222 transmits the generated first SC to the manufacturer-side management device 221. The manufacturer-side terminal device 222 generates the second SC, based on the operation input of the user on the manufacturer side. The manufacturer-side terminal device 222 transmits the generated second SC to the manufacturer-side management device 221. The manufacturer-side terminal device 222 is, for example, a PC, a tablet terminal, a smartphone, or the like.

The purchaser-side management device 231 receives the calculation request from the purchaser-side terminal device 232. The purchaser-side management device 231 issues a transaction including the calculation request and transmits the transaction to the block generation device 201. As a result, the purchaser-side management device 231 can distribute the block including the calculation request to the supplier-side management device 211, the manufacturer-side management device 221, and the purchaser-side management device 231.

Upon receiving the block including the trail data from the block generation device 201, the purchaser-side management device 231 stores the block including the trail data in the distributed ledger managed by the own device. Upon receiving the block including the token from the block generation device 201, the purchaser-side management device 231 stores the block including the token in the distributed ledger managed by the own device.

Upon receiving the block including the first SC from the block generation device 201, the purchaser-side management device 231 stores the block including the first SC in the distributed ledger managed by the own device. Upon receiving the block including the second SC from the block generation device 201, the purchaser-side management device 231 stores the block including the second SC in the distributed ledger managed by the own device.

Upon receiving the block including the calculation request from the block generation device 201, the purchaser-side management device 231 stores the block including the calculation request in the distributed ledger managed by the own device. The calculation request requests to calculate a ratio at which a profit is distributed to a plurality of participants. The participant is a purchaser, a manufacturer, or the like. The calculation request includes designation of the token.

In response to the calculation request, the purchaser-side management device 231 calculates the index value indicating the contribution degree to the purpose, regarding each of the plurality of processes, using the first SC, based on the token. The purchaser-side management device 231 calculates the ratio at which the profit is distributed to the plurality of participants, based on the index value indicating the contribution degree to the purpose, regarding each of the plurality of processes, using the second SC, based on the token. The purchaser-side management device 231 is, for example, a server, a PC, or the like.

The purchaser-side terminal device 232 generates a calculation request for any one token, based on an operation input of a user on a purchaser side. The calculation request includes designation of the token. The purchaser-side terminal device 232 transmits the generated calculation request to the purchaser-side management device 231. The purchaser-side terminal device 232 is, for example, a PC, a tablet terminal, a smartphone, or the like.

The block generation device 201 receives the transaction including the trail data from the supplier-side management device 211 and generates a block including the trail data. The block generation device 201 transmits the generated block to the supplier-side management device 211, the manufacturer-side management device 221, and the purchaser-side management device 231.

The block generation device 201 receives the transaction including the trail data from the manufacturer-side management device 221 and generates a block including the trail data. The block generation device 201 transmits the generated block to the supplier-side management device 211, the manufacturer-side management device 221, and the purchaser-side management device 231.

The block generation device 201 receives the transaction including the token from the manufacturer-side management device 221 and generates a block including the token. The block generation device 201 transmits the generated block to the supplier-side management device 211, the manufacturer-side management device 221, and the purchaser-side management device 231.

The block generation device 201 receives the transaction including the first SC from the manufacturer-side management device 221 and generates a block including the first SC. The block generation device 201 transmits the generated block to the supplier-side management device 211, the manufacturer-side management device 221, and the purchaser-side management device 231.

The block generation device 201 receives the transaction including the second SC from the manufacturer-side management device 221 and generates a block including the second SC. The block generation device 201 transmits the generated block to the supplier-side management device 211, the manufacturer-side management device 221, and the purchaser-side management device 231.

The block generation device 201 receives the transaction including the calculation request from the purchaser-side management device 231 and generates a block including the calculation request. The block generation device 201 transmits the generated block to the supplier-side management device 211, the manufacturer-side management device 221, and the purchaser-side management device 231. The block generation device 201 is, for example, a server, a PC, or the like.

Here, a case has been described where the block generation device 201 is a device different from all of the supplier-side management device 211, the manufacturer-side management device 221, and the purchaser-side management device 231. However, the present invention is not limited to this. For example, there may be a case where the block generation device 201 is integrated with any one of the supplier-side management device 211, the manufacturer-side management device 221, and the purchaser-side management device 231.

Here, a case has been described where the supplier-side management device 211 and the supplier-side terminal device 212 are different devices. However, the present invention is not limited to this. For example, there may be a case where the supplier-side management device 211 has a function as the supplier-side terminal device 212 and also operates as the supplier-side terminal device 212.

Here, a case has been described where the manufacturer-side management device 221 and the manufacturer-side terminal device 222 are different devices. However, the present invention is not limited to this. For example, there may be a case where the manufacturer-side management device 221 has a function as the manufacturer-side terminal device 222 and also operates as the manufacturer-side terminal device 222.

Here, a case has been described where the purchaser-side management device 231 and the purchaser-side terminal device 232 are different devices. However, the present invention is not limited to this. For example, there may be a case where the purchaser-side management device 231 has a function as the purchaser-side terminal device 232 and also operates as the purchaser-side terminal device 232.

### (Hardware Configuration Example of Computer 300)

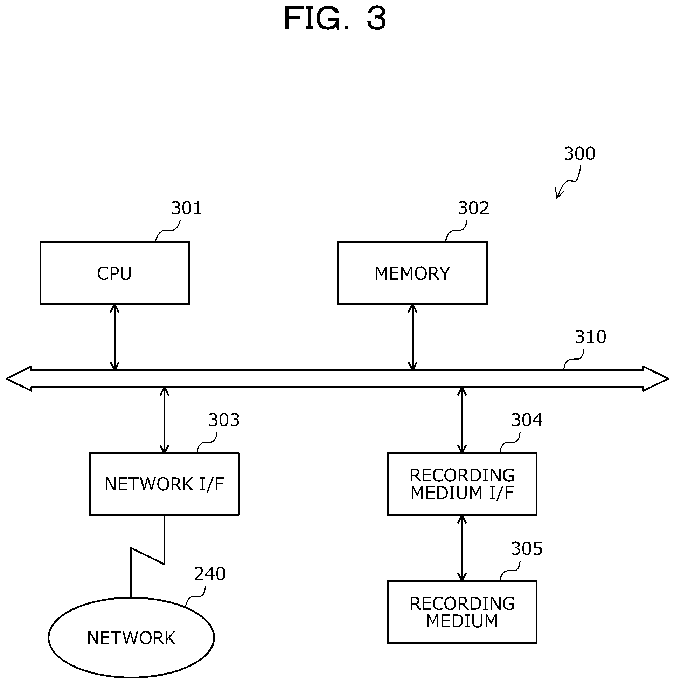

Next, a hardware configuration example of a computer 300 will be described with reference to FIG. 3. The computer 300 may be the supplier-side management device 211, the supplier-side terminal device 212, the manufacturer-side management device 221, the manufacturer-side terminal device 222, the purchaser-side management device 231, the purchaser-side terminal device 232, or the block generation device 201.

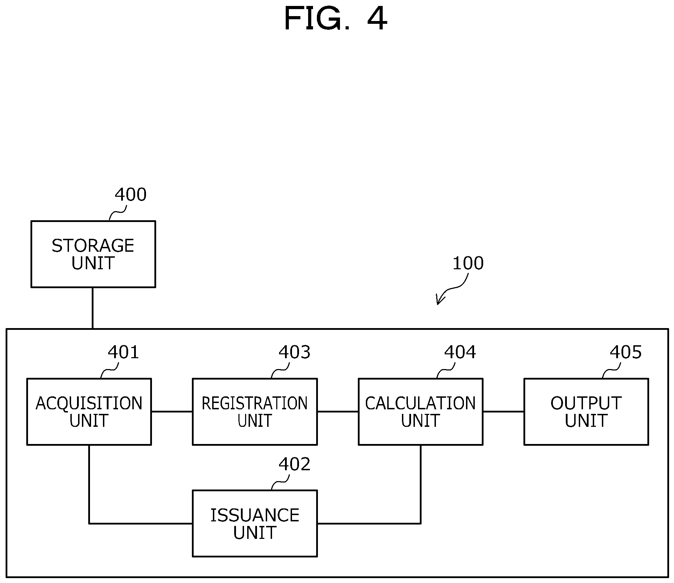

FIG. 3 is a block diagram illustrating a hardware configuration example of the computer 300. In FIG. 4, the computer 300 includes a central processing unit (CPU) 301, a memory 302, a network interface (I/F) 303, a recording medium I/F 304, and a recording medium 305. Furthermore, the components are coupled to each other by a bus 310.

Here, the CPU 301 controls the entire computer 300. The memory 302 includes, for example, a read only memory (ROM), a random access memory (RAM), a flash ROM, or the like. Specifically, for example, the flash ROM or the ROM stores various programs, and the RAM is used as a work area for the CPU 301. The programs stored in the memory 302 are loaded into the CPU 301 to cause the CPU 301 to execute coded processing. The memory 302 may store, for example, the distributed ledger.

The network I/F 303 is coupled to the network 240 through a communication line and is coupled to another computer 300 via the network 240. Then, the network I/F 303 takes control of an interface between the network 240 and the inside, and controls input and output of data to and from the another computer 300. The network I/F 303 is, for example, a modem, a LAN adapter, or the like.

The recording medium I/F 304 controls reading and writing of data from and to the recording medium 305 under the control of the CPU 301. The recording medium I/F 304 is, for example, a disk drive, a solid state drive (SSD), a universal serial bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be attachable to and detachable from the computer 300.

The computer 300 may include, for example, a keyboard, a mouse, a display, a printer, a scanner, a microphone, a speaker, or the like in addition to the components described above. Furthermore, the computer 300 may include a plurality of the recording medium I/Fs 304 and a plurality of the recording media 305. Furthermore, the computer 300 does not need to include the recording medium I/F 304 and the recording medium 305.

### (Functional Configuration Example of Information Processing Device 100)

Next, a functional configuration example of the information processing device 100 that may be the supplier-side management device 211, the manufacturer-side management device 221, the purchaser-side management device 231, or the like will be described with reference to FIG. 4.

FIG. 4 is a block diagram illustrating a functional configuration example of the information processing device 100. The information processing device 100 includes a storage unit 400, an acquisition unit 401, an issuance unit 402, a registration unit 403, a calculation unit 404, and an output unit 405. The information processing device 100 corresponds to any one of the plurality of processes regarding the source of the profit.

The storage unit 400 is implemented by a storage area such as the memory 302 or the recording medium 305 illustrated in FIG. 3, for example. Hereinafter, a case where the storage unit 400 is included in the information processing device 100 will be described. However, the present invention is not limited to this. For example, the storage unit 400 may be included in a device different from the information processing device 100, and content stored in the storage unit 400 may be able to be referred to by the information processing device 100.

The acquisition unit 401 to the output unit 405 function as examples of a control unit. Specifically, the acquisition unit 401 to the output unit 405 implement functions thereof by, for example, causing the CPU 301 to execute a program stored in the storage area such as the memory 302 or the recording medium 305 or by the network I/F 303 illustrated in FIG. 3. A processing result of each functional unit is stored in, for example, the storage area such as the memory 302 or the recording medium 305 illustrated in FIG. 3.

The storage unit 400 stores various types of information to be referred to or updated in processing of each functional unit. The storage unit 400 stores, for example, the distributed ledger. The distributed ledger is formed by coupling the blocks. The block is registered in the distributed ledger by the registration unit 403, for example.

Specifically, the storage unit 400 stores the trail data. The trail data indicates, for example, a correspondence relationship between any one process, an actual value in the process regarding the purpose, and a record type of the actual value. The trail data is acquired by the acquisition unit 401, for example. More specifically, the storage unit 400 stores the block including the trail data in the distributed ledger. The block including the trail data is acquired by the registration unit 403, for example.

Specifically, the storage unit 400 stores the token. The token indicates, for example, a correspondence relationship between a source of a profit and trail data registered in a distributed ledger for each process. The token is acquired by the acquisition unit 401, for example. More specifically, the storage unit 400 stores the block including the token in the distributed ledger. The block including the token is acquired by the registration unit 403, for example.

Specifically, the storage unit 400 stores the SC. Specifically, the storage unit 400 stores the first SC. The first SC has, for example, the function for converting the actual value in any one process regarding the purpose into the index value indicating the contribution degree to the purpose, indicated by the criterion unified in the plurality of processes, according to the record type of the actual value. The first SC may have, for example, the function for converting the actual value in any one process regarding the purpose into the index value indicating the contribution degree to the purpose, that is a contribution type corresponding to the record type of the actual value. The first SC is acquired by the acquisition unit 401, for example. More specifically, the storage unit 400 stores the block including the first SC in the distributed ledger. The block including the first SC is acquired by the registration unit 403, for example.

Specifically, the storage unit 400 stores the second SC. The second SC has, for example, a function for calculating the ratio at which the profit obtained from the source is distributed to the plurality of participants sharing the plurality of processes, based on the index value indicating the contribution degree to the purpose, in each process. The second SC may have, for example, a function for calculating the ratio at which the profit obtained from the source is distributed to the plurality of participants, based on the index value indicating the contribution degree to the purpose, that is the contribution type. The second SC is acquired by the acquisition unit 401, for example. More specifically, the storage unit 400 stores the block including the second SC in the distributed ledger. The block including the second SC is acquired by the registration unit 403, for example.

Specifically, the storage unit 400 stores the calculation request. The calculation request includes designation of the token. The calculation request requests to calculate the ratio at which a profit obtained from a source corresponding to a designated token is distributed to the plurality of participants, based on trail data corresponding to the designated token. The calculation request is acquired by the acquisition unit 401, for example. More specifically, the storage unit 400 stores a block including the calculation request in the distributed ledger. The block including the calculation request is acquired by the registration unit 403, for example.

The acquisition unit 401 acquires various types of information used for processing of each functional unit. The acquisition unit 401 stores various types of the acquired information in the storage unit 400 or outputs various types of the acquired information to each functional unit. Furthermore, the acquisition unit 401 may output the various types of information stored in the storage unit 400 to each functional unit. The acquisition unit 401 acquires various types of information, for example, based on the operation input of the user. The acquisition unit 401 may acquire various types of information from a device different from the information processing device 100, for example.

The acquisition unit 401 acquires, for example, a trail data registration request. For example, in a case where the own device corresponds to the supplier-side management device 211, the acquisition unit 401 acquires the trail data registration request. The registration request includes, for example, the trail data. The registration request is generated, for example, in response to completion of any one process. Specifically, the acquisition unit 401 acquires the trail data registration request from another computer by receiving the trail data registration request from the another computer. The another computer is, for example, the supplier-side terminal device 212. Specifically, the acquisition unit 401 acquires the trail data registration request, by receiving an input of the trail data registration request, based on the operation input of the user.

The acquisition unit 401 acquires, for example, a token registration request. For example, in a case where the own device corresponds to the manufacturer-side management device 221, the acquisition unit 401 acquires the token registration request. The registration request includes, for example, the token. The registration request is generated, for example, in response to completion of the plurality of processes. Specifically, the acquisition unit 401 acquires the token registration request by receiving the token registration request from another computer. The another computer is, for example, the manufacturer-side terminal device 222. Specifically, the acquisition unit 401 acquires the token registration request, by receiving an input of the token registration request, based on the operation input of the user.

For example, the acquisition unit 401 acquires a registration request of the first SC corresponding to any one process. For example, in a case where the own device corresponds to the manufacturer-side management device 221, the acquisition unit 401 acquires the registration request of the first SC corresponding to any one process. The registration request includes, for example, the first SC. The registration request includes, for example, designation of any one process. Specifically, the acquisition unit 401 acquires the registration request of the first SC by receiving the registration request from another computer. The another computer is, for example, the manufacturer-side terminal device 222. Specifically, the acquisition unit 401 acquires the registration request of the first SC, by receiving an input of the registration request of the first SC, based on the operation input of the user.

The acquisition unit 401 acquires, for example, a registration request of the second SC. For example, in a case where the own device corresponds to the manufacturer-side management device 221, the acquisition unit 401 acquires the registration request of the second SC. The registration request includes, for example, the second SC. Specifically, the acquisition unit 401 acquires the registration request of the second SC by receiving the registration request from another computer. The another computer is, for example, the manufacturer-side terminal device 222. Specifically, the acquisition unit 401 acquires the registration request of the second SC, by receiving an input of the registration request of the second SC, based on the operation input of the user.

The acquisition unit 401 acquires, for example, a registration request of the calculation request. For example, in a case where the own device corresponds to the purchaser-side management device 231, the acquisition unit 401 acquires the registration request of the calculation request. The registration request includes, for example, the calculation request. Specifically, the acquisition unit 401 acquires the registration request of the calculation request by receiving the registration request from another computer. The another computer is the purchaser-side terminal device 232. Specifically, the acquisition unit 401 acquires the registration request of the calculation request, by receiving an input of the registration request of the calculation request, based on the operation input of the user.

The acquisition unit 401 may receive a start trigger to start processing of any one of the functional units. The start trigger is, for example, a predetermined operation input made by the user. The start trigger may be, for example, reception of predetermined information from another computer. The start trigger may be, for example, output of predetermined information by one of the functional units.

The acquisition unit 401 may receive, for example, acquisition of various registration requests as a start trigger to start the processing of the issuance unit 402. For example, the acquisition unit 401 may receive detection of the registration of the block including the calculation request in the distributed ledger stored in the storage unit 400, as a start trigger to start the processing of the calculation unit 404.

The issuance unit 402 issues a transaction. The issuance unit 402 issues, for example, a transaction including the first SC. Specifically, the issuance unit 402 issues the transaction including the first SC, in response to the acquisition of the registration request of the first SC corresponding to any one process by the acquisition unit 401. As a result, the issuance unit 402 can control the information processing device 100 so as to register the block including the first SC in the distributed ledger managed by each of the plurality of information processing devices 100.

The issuance unit 402 issues, for example, a transaction including the second SC. Specifically, the issuance unit 402 issues the transaction including the second SC, in response to acquisition of the registration request of the second SC by the acquisition unit 401. As a result, the issuance unit 402 can control the information processing device 100 so as to register the block including the second SC in the distributed ledger managed by each of the plurality of information processing devices 100.

The issuance unit 402 issues, for example, a transaction including the trail data. Specifically, the issuance unit 402 issues the transaction including the trail data, in response to acquisition of the trail data registration request by the acquisition unit 401. As a result, the issuance unit 402 can control the information processing device 100 so as to register the block including the trail data in the distributed ledger managed by each of the plurality of information processing devices 100.

The issuance unit 402 issues, for example, a transaction including the token. Specifically, the issuance unit 402 issues the transaction including the token, in response to acquisition of the token registration request by the acquisition unit 401. As a result, the issuance unit 402 can control the information processing device 100 so as to register the block including the token in the distributed ledger managed by each of the plurality of information processing devices 100.

The issuance unit 402 issues, for example, a transaction including the calculation request. Specifically, the issuance unit 402 issues the transaction including the calculation request, in response to acquisition of the registration request of the calculation request by the acquisition unit 401. As a result, the issuance unit 402 can control the information processing device 100 so as to register the block including the calculation request in the distributed ledger managed by each of the plurality of information processing devices 100.

The registration unit 403 registers the first SC, for each of the plurality of processes. The registration unit 403 may register a single common first SC for two or more processes. For example, in a case of receiving the block including the first SC according to the transaction, the registration unit 403 registers the block including the first SC in the distributed ledger. As a result, the registration unit 403 can make the first SC be available.

The registration unit 403 registers the second SC. For example, in a case of receiving the block including the second SC according to the transaction, the registration unit 403 registers the block including the second SC in the distributed ledger. As a result, the registration unit 403 can make the second SC be available.

The registration unit 403 registers the trail data for any one process. For example, in a case of receiving the block including the trail data according to the transaction, the registration unit 403 registers the block including the trail data in the distributed ledger. As a result, the registration unit 403 can make the trail data be available. The registration unit 403 can use the actual value in each process regarding the purpose.

The registration unit 403 registers the token for any one process. For example, in a case of receiving the block including the token according to the transaction, the registration unit 403 registers the block including the token in the distributed ledger. As a result, the registration unit 403 can make the token be available. When calculating the ratio at which the profit obtained from the source corresponding to the token is distributed to the plurality of users, the registration unit 403 can specify which trail data is referred based on the token.

The registration unit 403 registers the calculation request for any one process. For example, in a case of receiving the block including the calculation request according to the transaction, the registration unit 403 registers the block including the calculation request in the distributed ledger. As a result, the registration unit 403 can make the calculation request be available. The registration unit 403 can specify whether or not it is requested to calculate the ratio at which the profit is distributed to the plurality of users, based on which token.

The calculation unit 404 calculates the index value regarding each process. For example, the calculation unit 404 calculates the index value regarding each process, in response to registration of the block including the calculation request for designating the token. Specifically, the calculation unit 404 calculates the index value regarding the process, according to the record type of the actual value in the process regarding the purpose, using the first SC corresponding to each process, based on the token, with reference to the distributed ledger. As a result, the calculation unit 404 can obtain a guideline for calculating the ratio at which the profit obtained from the source is distributed to the plurality of participants.

Specifically, the calculation unit 404 may calculate the index value regarding the process, that is the contribution type corresponding to the record type of the actual value in the process regarding the purpose, using the first SC corresponding to each process, based on the token, with reference to the distributed ledger. As a result, the calculation unit 404 can obtain a guideline for calculating the ratio at which the profit obtained from the source is distributed to the plurality of participants. The calculation unit 404 can obtain the plurality of guidelines from different viewpoints.

The calculation unit 404 calculates the ratio at which the profit obtained from the source is distributed to the plurality of participants. For example, the calculation unit 404 calculates the ratio at which the profit obtained from the source is distributed to the plurality of participants, according to the calculated index value regarding each process, using the second SC. As a result, the calculation unit 404 can appropriately distribute the profit obtained from the source to the plurality of participants.

For example, the calculation unit 404 may calculate the ratio at which the profit obtained from the source is distributed to the plurality of participants, based on a weight for each contribution type, according to the index value that is the contribution type corresponding to the record type of the actual value in each process regarding the purpose, using the second SC. As a result, the calculation unit 404 can appropriately distribute the profit obtained from the source to the plurality of participants, in consideration of the index values of the different contribution types.

The calculation unit 404 may calculate a distribution amount of the profit obtained from the source to be distributed to each participant, based on the calculated ratio. As a result, the calculation unit 404 can appropriately distribute the profit obtained from the source to each participant.

The output unit 405 outputs a processing result of at least any one of the functional units. Examples of an output format include display on a display, print output to a printer, transmission to an external device by the network I/F 303, or storage in a storage area such as the memory 302 or the recording medium 305. As a result, the output unit 405 can notify the user of the processing result of at least any one of the functional units to improve convenience of the information processing device 100.

The output unit 405 outputs the ratio calculated by the calculation unit 404. The output unit 405 outputs, for example, the ratio calculated by the calculation unit 404, to be referred by the user. The output unit 405 may output, for example, the ratio calculated by the calculation unit 404 to the functional unit that distributes the profit obtained from the source to each participant. The functional unit may be included in a device other than the information processing device 100, for example. As a result, the calculation unit 404 can appropriately distribute the profit obtained from the source to the plurality of participants.

The output unit 405 may output the distribution amount calculated by the calculation unit 404. The output unit 405 outputs, for example, the distribution amount calculated by the calculation unit 404, to be referred by the user. The output unit 405 may output, for example, the distribution amount calculated by the calculation unit 404 to the functional unit that distributes the profit obtained from the source to each participant. The functional unit may be included in a device other than the information processing device 100, for example. As a result, the calculation unit 404 can appropriately distribute the profit obtained from the source to the plurality of participants.

### (Functional Configuration Example of Information Processing System 200)

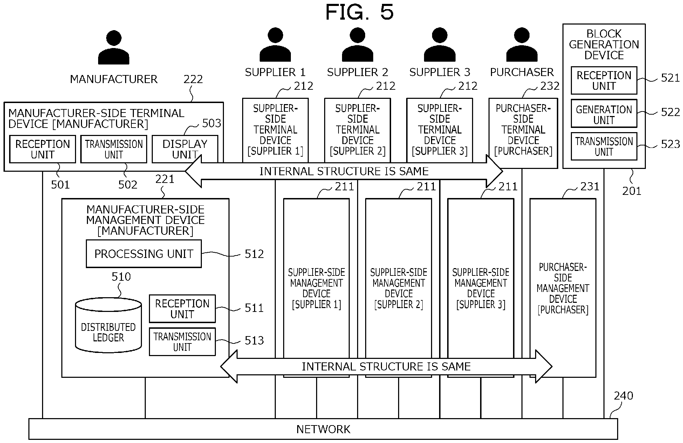

Next, a functional configuration example of the information processing system 200 will be described with reference to FIG. 5.

FIG. 5 is a block diagram illustrating the functional configuration example of the information processing system 200. In FIG. 5, the manufacturer-side terminal device 222 includes a reception unit 501, a transmission unit 502, and a display unit 503. The reception unit 501 receives an operation input of the user on the manufacturer side. The transmission unit 502 transmits the trail data registration request, the token registration request, the registration request of the SC, or the like to the manufacturer-side management device 221, based on the received operation input of the user on the manufacturer side. The display unit 503 displays a screen that receives the operation input of the user on the manufacturer side.

Similarly, the supplier-side terminal device 212 includes the reception unit 501, the transmission unit 502, and the display unit 503. Furthermore, similarly, the purchaser-side terminal device 232 includes the reception unit 501, the transmission unit 502, and the display unit 503.

The manufacturer-side management device 221 includes a distributed ledger 510, a reception unit 511, a processing unit 512, and a transmission unit 513. The distributed ledger 510 stores the trail data, the token, the SC, or the like included in the block. The reception unit 511 receives the trail data registration request, the token registration request, the registration request of the SC, or the like, from the manufacturer-side terminal device 222. The reception unit 511 receives the block including the trail data, the block including the token, the block including the SC, or the like, from the block generation device 201.

The processing unit 512 corresponds to each functional unit illustrated in FIG. 4. In response to the calculation request, the processing unit 512 calculates the index value indicating the contribution degree for each process, using the SC, based on the token designated in the calculation request and calculates a ratio at which a consideration to be the profit is distributed to each participant. In response to various registration requests, the transmission unit 513 transmits the transaction including the trail data, the transaction including the token, the transaction including the SC, or the like, to the block generation device 201.

Similarly, the supplier-side management device 211 includes the distributed ledger 510, the reception unit 511, the processing unit 512, and the transmission unit 513. Furthermore, similarly, the purchaser-side management device 231 includes the distributed ledger 510, the reception unit 511, the processing unit 512, and the transmission unit 513.

The block generation device 201 includes a reception unit 521, a generation unit 522, and a transmission unit 523. The reception unit 521 receives the transaction. For example, the reception unit 521 receives the transaction including the trail data, the transaction including the token, the transaction including the SC, or the like, from the manufacturer-side management device 221, the supplier-side management device 211, or the purchaser-side management device 231.

The generation unit 522 generates the block according to the transaction. For example, the generation unit 522 generates the block including the trail data, the block including the token, the block including the SC, or the like, according to various transactions. The transmission unit 523 transmits the generated block to the manufacturer-side management device 221, the supplier-side management device 211, or the purchaser-side management device 231. The block generation device 201 is a mining node, Ordering Service of Hyperledger Fabric that is consortium-type blockchain open source software, or the like. [x] in FIG. 5 indicates a participant x corresponding to the computer such as the manufacturer-side management device 221, the supplier-side management device 211, or the purchaser-side management device 231.

### (Flow of Operation of Information Processing System 200)

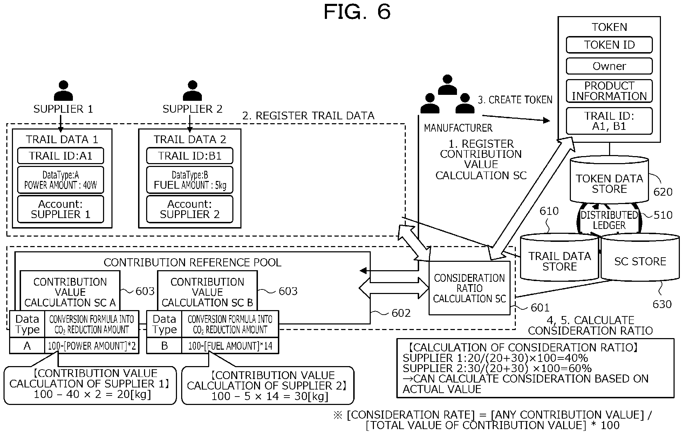

Next, a flow of an operation of the information processing system 200 will be described with reference to FIG. 6.

FIG. 6 is an explanatory diagram illustrating the flow of the operation of the information processing system 200. In FIG. 6, the distributed ledger 510 is managed by a block chain network. The block chain network includes the supplier-side management device 211, the manufacturer-side management device 221, and the purchaser-side management device 231 as nodes. The distributed ledger 510 is shared by various devices to be nodes.

The distributed ledger 510 stores a trail data store 610, a token data store 620, and an SC store 630. The trail data store 610 includes trail data. The token data store 620 includes a token. The SC store 630 includes an SC. The SC store 630 includes, for example, a consideration ratio calculation SC 601. The SC store 630 includes, for example, a contribution reference pool 602. The contribution reference pool 602 includes, for example, a contribution value calculation SC 603.

(7-1) The manufacturer generates the contribution value calculation SC 603 describing processing for calculating the contribution value based on the actual value, using the manufacturer-side terminal device 222. The contribution value calculation SC 603 includes, for example, "Data Type" representing the record type of the actual value and "calculation formula for converting actual value into contribution value". The manufacturer-side terminal device 222 transmits the contribution value calculation SC 603 to the manufacturer-side management device 221. The manufacturer-side management device 221 registers the contribution value calculation SC 603 in the SC store 630 of the distributed ledger 510. As a result, the contribution value calculation SC 603 is shared by various devices to be the nodes.

(7-2) The supplier generates the trail data including the actual value, using the supplier-side terminal device 212, upon completion of a process regarding a product to be handled. The trail data includes, for example, "trail ID" that is identification information of the trail data, "actual value" in the process regarding the product, "Data Type" representing the record type of the actual value, and "account information" representing a participant who is a consideration distribution destination. The supplier-side terminal device 212 transmits the trail data to the supplier-side management device 211. The supplier-side management device 211 registers the trail data in the trail data store 610 of the distributed ledger 510. As a result, the trail data is shared by various devices to be the nodes.

(7-3) The manufacturer generates a token using the manufacturer-side terminal device 222, when the process regarding the product to be handled is completed and the product is produced. The token includes, for example, "token ID" that is identification information of the token, "owner information (owner) of token" representing a participant who has generated the token, and "product information" representing a product for which a consideration is paid. The token further includes, for example, "trail ID" that is identification information of the trail data regarding each process regarding the product. The manufacturer-side terminal device 222 transmits the token to the manufacturer-side management device 221. The manufacturer-side management device 221 registers the token in the token data store 620 of the distributed ledger 510. As a result, the token is shared by various devices to be the nodes.

(7-4) The purchaser purchases the product and pays a consideration for the product. For example, the purchaser purchases a token regarding the product and pays a consideration for the token. The purchaser generates a calculation request including designation of the token, using the purchaser-side terminal device 232. The calculation request includes, for example, the "token ID" that is the identification information of the token. The purchaser-side terminal device 232 transmits the calculation request to the purchaser-side management device 231. The purchaser-side management device 231 registers the calculation request in the distributed ledger 510. As a result, the calculation request is shared by various devices to be the nodes.

(7-5) Various devices to be the nodes calculate the consideration ratio representing the ratio at which the consideration is distributed to each participant, using the contribution value calculation SC 603 and the consideration ratio calculation SC 601, in response to the calculation request. The contribution value calculation SC 603 may be controlled by the consideration ratio calculation SC 601, for example.

For example, the consideration ratio calculation SC 601 of the manufacturer-side management device 221 searches for a token from the distributed ledger 510, using the token ID included in the calculation request as a key. For example, the consideration ratio calculation SC 601 searches for the trail data from the distributed ledger 510, using a trail ID included in the searched token as a key. For example, the consideration ratio calculation SC 601 acquires the Data Type, the actual value, and the account information included in the searched trail data. For example, the consideration ratio calculation SC 601 specifies a contribution value calculation SC 603 corresponding to the acquired Data Type and inputs the actual value.

For example, the contribution value calculation SC 603 calculates a contribution value obtained by converting the input actual value, using a calculation formula included in the contribution value calculation SC 603 and inputs the contribution value to the consideration ratio calculation SC 601. Specifically, if the actual value is a power amount, [contribution value] = 100 - [power amount] * 2 is calculated. Specifically, if the actual value is a fuel amount, [contribution value] = 100 - [fuel amount] * 14 is calculated.

For example, the consideration ratio calculation SC 601 acquires the converted contribution value for each trail data, and calculates a consideration ratio, using the calculation formula included in the consideration ratio calculation SC 601, based on the acquired contribution value. Specifically, [consideration ratio] = [any contribution value]/[total value of contribution value] * 100 is calculated. More specifically, for a supplier 1, [consideration ratio] = [20]/[20 + 30] * 100 = 40% is calculated. More specifically, for a supplier 2, [consideration ratio] = [30]/[20 + 30] * 100 = 60% is calculated.

As a result, it is possible to for the information processing system 200 to calculate an appropriate consideration ratio. The information processing system 200 can separately manage the contribution value calculation SC 603 for each consideration reference and manage the trail data with the token. When the consideration is generated for the token, the information processing system 200 can specify the trail data corresponding to the token.

Therefore, the information processing system 200 can suppress adverse effects of each participant in a case where the contribution value calculation SC 603 is added or the like. Therefore, the information processing system 200 can make it easier to cope with a situation change. The information processing system 200 can appropriately manage the trail data, make it easier to calculate the consideration ratio, and make it easier to specify the participant who receives the consideration.

### (First Operation Example of Information Processing System 200)

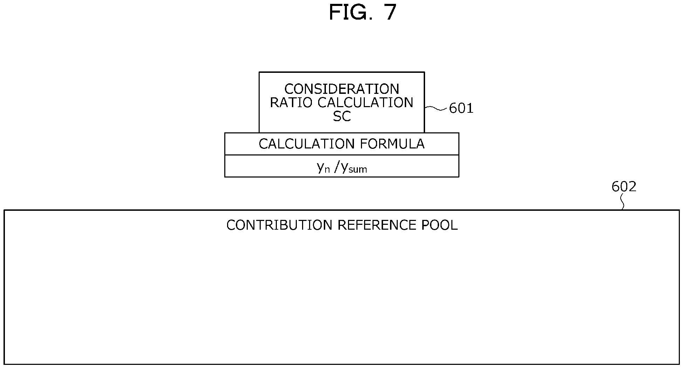

Next, a first operation example of the information processing system 200 will be described with reference to FIGs. 7 to 24.

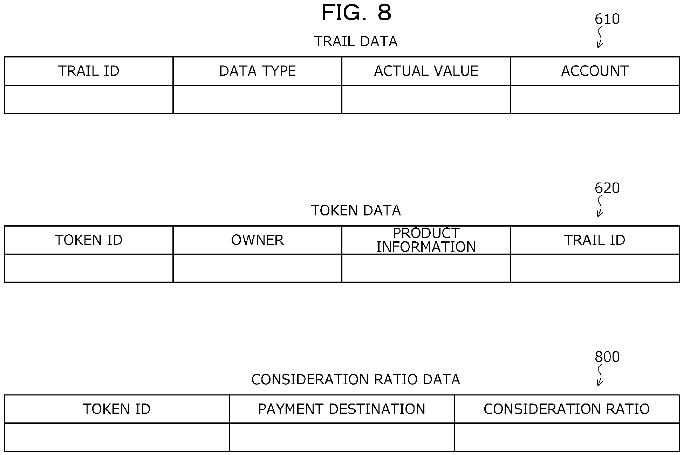

FIGs. 7 to 24 are explanatory diagrams illustrating the first operation example of the information processing system 200. Specifically, FIGs. 7 and 8 illustrate an initial state of the distributed ledger 510. As illustrated in FIG. 7, the distributed ledger 510 stores the consideration ratio calculation SC 601. The consideration ratio calculation SC 601 includes a calculation formula. The distributed ledger 510 includes the contribution reference pool 602. Next, description of FIG. 8 will be made.

As illustrated in FIG. 8, the distributed ledger 510 stores the trail data store 610, the token data store 620, and a consideration ratio data store 800. In the initial state, the trail data store 610 is empty. The token data store 620 is empty. The consideration ratio data store 800 is empty.

The trail data store 610 includes fields of a trail ID, Data Type, an actual value, and an account. In the trail data store 610, the trail data is stored as a record, by setting information in each field for each process. In the field of the trail ID, "trail ID" that is the identification information of the trail data is set. In the field of the Data Type, "Data Type" representing the record type of the actual value is set. In the field of the actual value, "actual value" is set. In the field of the account, "account information" representing the participant who is the consideration distribution destination is set.

The token data store 620 includes fields of a token ID, an owner, product information, and a trail ID. In the token data store 620, the token is stored as a record, by setting information in each field for each product. In the field of the token ID, "token ID" that is the identification information of the token is set. In the field of the owner, "owner information (owner) of token" representing the participant who has generated the token is set. In the field of the product information, "product information" representing a product for which a consideration is paid is set. In the field of the trail ID, "trail ID" that is the identification information of the trail data regarding each process regarding the product is set.

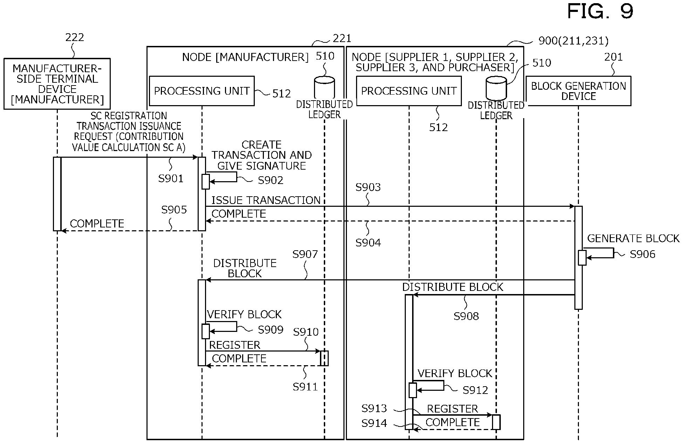

The consideration ratio data store 800 includes fields of a token ID, a payment destination, and a consideration ratio. In the consideration ratio data store 800, the consideration ratio is stored as a record, by setting information in each field for each participant. In the field of the token ID, "token ID" that is the identification information of the token data regarding the product for which the consideration is generated is set. In the field of the payment destination, the consideration ratio is calculated, and "participant information" representing a participant who receives the consideration is set. In the field of the consideration ratio, "consideration ratio" corresponding to the participant is set. Next, description of FIG. 9 will be made.

Specifically, FIG. 9 illustrates a sequence diagram illustrating an example of an SC registration processing procedure for registering the contribution value calculation SC 603, in the information processing system 200. In FIG. 9, the manufacturer-side terminal device 222 generates the contribution value calculation SC 603, based on the operation input of the user on the manufacturer side.

In the following description, there is a case where different types of contribution value calculation SCs 603 are referred to as "contribution value calculation SC X603" to be distinguishable. X includes A, B, C, or the like. In the example in FIG. 9, the manufacturer-side terminal device 222 generates a contribution value calculation SC A603. The contribution value calculation SC 603 is generated by the manufacturer, an expert of environmental protection, or the like for each viewpoint of the environmental protection.

The manufacturer-side terminal device 222 transmits an SC registration transaction issuance request including the generated contribution value calculation SC A603 to the manufacturer-side management device 221 to be a node (step S901). Upon receiving the SC registration transaction issuance request, the manufacturer-side management device 221 generates an SC registration transaction including the contribution value calculation SC A603 and gives a signature (step S902). The manufacturer-side management device 221 issues the SC registration transaction to the block generation device 201 (step S903).

Upon receiving the SC registration transaction, the block generation device 201 transmits a completion notification to the manufacturer-side management device 221 (step S904). Upon receiving the completion notification, the manufacturer-side management device 221 transmits the completion notification to the manufacturer-side terminal device 222 (step S905).

Upon receiving the SC registration transaction, the block generation device 201 generates a block including the contribution value calculation SC A603 (step S906). The block generation device 201 distributes the generated block to the manufacturer-side management device 221 (step S907). The block generation device 201 distributes the generated block to various devices 900 to be nodes (step S908).

For example, the various devices 900 include the supplier-side management device 211 corresponding to the supplier 1, the supplier-side management device 211 corresponding to the supplier 2, the supplier-side management device 211 corresponding to a supplier 3, the purchaser-side management device 231, or the like.

Upon receiving the block by the processing unit 512, the manufacturer-side management device 221 verifies the received block (step S909). When the block is verified to be valid by the processing unit 512, the manufacturer-side management device 221 registers the block in the distributed ledger 510 (step S910). The manufacturer-side management device 221 receives the completion notification from the distributed ledger 510, by the processing unit 512 (step S911).

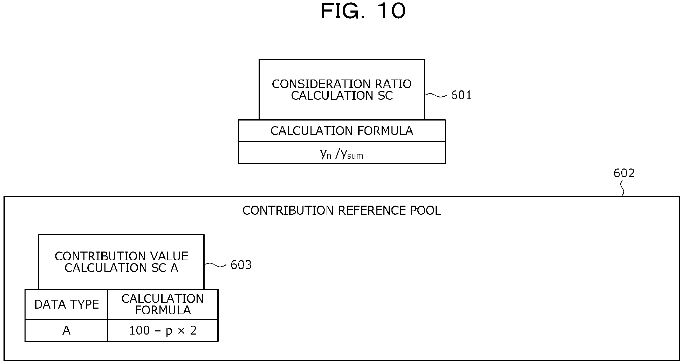

Upon receiving the block by the processing unit 512, the various devices 900 verify the received block (step S912). When the block is verified to be valid by the processing unit 512, the various devices 900 register the block in the distributed ledger 510 (step S913). The various devices 900 receive the completion notification from the distributed ledger 510, by the processing unit 512 (step S914). As a result, the information processing system 200 can share the contribution value calculation SC 603 by the plurality of nodes. Next, description of FIG. 10 will be made.

Specifically, FIG. 10 illustrates a state of the distributed ledger 510. As illustrated in FIG. 10, by SC registration processing, the distributed ledger 510 stores the contribution value calculation SC A603 in the contribution reference pool 602. As a result, the contribution value calculation SC A603 can be referred by the supplier-side management device 211, the manufacturer-side management device 221, the purchaser-side management device 231, or the like. The contribution value can be calculated based on the actual value, by the supplier-side management device 211, the manufacturer-side management device 221, the purchaser-side management device 231, or the like.

The supplier refers to the contribution reference pool 602 and can grasp that it is sufficient to contribute to the environmental protection from a viewpoint indicated by the contribution value calculation SC 603. If the contribution reference pool 602 includes the plurality of contribution value calculation SCs 603, the supplier can refer to the contribution reference pool 602 and select, from a viewpoint indicated by which contribution value calculation SC 603, to contribute to the environmental protection. In a case where it is desired to contribute to the environmental protection from another viewpoint, the supplier can register the contribution value calculation SC 603 of the another viewpoint in the distributed ledger 510, via the supplier-side management device 211 or by requesting the manufacturer.

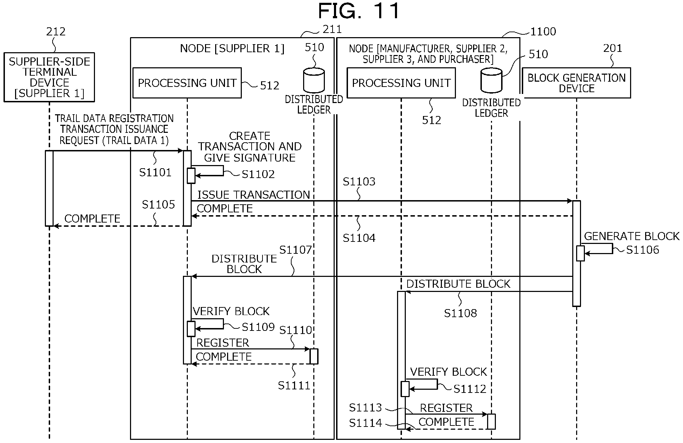

The contribution value calculation SC A603 includes Data Type that is a record type of an actual value and a calculation formula that can calculate a contribution value based on the actual value. The calculation formula calculates, for example, contribution value = CO₂ reduction amount. Specifically, the calculation formula is 100 - p * 2. The reference p is an actual value. The actual value is, for example, a power amount. Since the CO₂ reduction amount is larger as the power amount is smaller, the contribution value increases. Next, description of FIG. 11 will be made.

Specifically, FIG. 11 illustrates a sequence diagram illustrating an example of a trail data registration processing procedure for registering the trail data, in the information processing system 200. In FIG. 11, the user on the supplier side corresponding to the supplier 1 selects a record type Data Type of an actual value in a process of the supplier 1.

The user on the supplier side inputs a correspondence relationship between the selected record type Data Type and the actual value, to the supplier-side terminal device 212 corresponding to the supplier 1. The supplier-side terminal device 212 generates the trail data, based on the operation input of the user on the supplier side. In the example in FIG. 11, the supplier-side terminal device 212 generates trail data 1 including a trail ID = A1, a record type Data Type = A (power amount), an actual value, and account information.

The supplier-side terminal device 212 transmits a trail data registration transaction issuance request including the generated trail data 1 to the supplier-side management device 211 to be the node (step S1101). Upon receiving the trail data registration transaction issuance request, the supplier-side management device 211 generates a trail data registration transaction including the trail data 1 and gives a signature (step S1102). The supplier-side management device 211 issues the trail data registration transaction to the block generation device 201 (step S1103).

Upon receiving the trail data registration transaction, the block generation device 201 transmits the completion notification to the supplier-side management device 211 (step S1104). Upon receiving the completion notification, the supplier-side management device 211 transmits the completion notification to the supplier-side terminal device 212 (step S1105).

Upon receiving the trail data registration transaction, the block generation device 201 generates a block including the trail data 1 (step S1106). The block generation device 201 distributes the generated block to the supplier-side management device 211 (step S1107). The block generation device 201 distributes the generated block to various devices 1100 to be nodes (step S1108).

The various devices 1100 are, for example, the manufacturer-side management device 221, the supplier-side management device 211 corresponding to the supplier 2, the supplier-side management device 211 corresponding to the supplier 3, the purchaser-side management device 231, or the like.

Upon receiving the block by the processing unit 512, the supplier-side management device 211 verifies the received block (step S1109). When the block is verified to be valid by the processing unit 512, the supplier-side management device 211 registers the block in the distributed ledger 510 (step S1110). The supplier-side management device 211 receives the completion notification from the distributed ledger 510, by the processing unit 512 (step S1111).

Upon receiving the block by the processing unit 512, the various devices 1100 verify the received block (step S1112). When the block is verified to be valid by the processing unit 512, the various devices 1100 register the block in the distributed ledger 510 (step S1113). The various devices 1100 receive the completion notification from the distributed ledger 510, by the processing unit 512 (step S1114). As a result, the information processing system 200 can share the trail data 1 by the plurality of nodes.

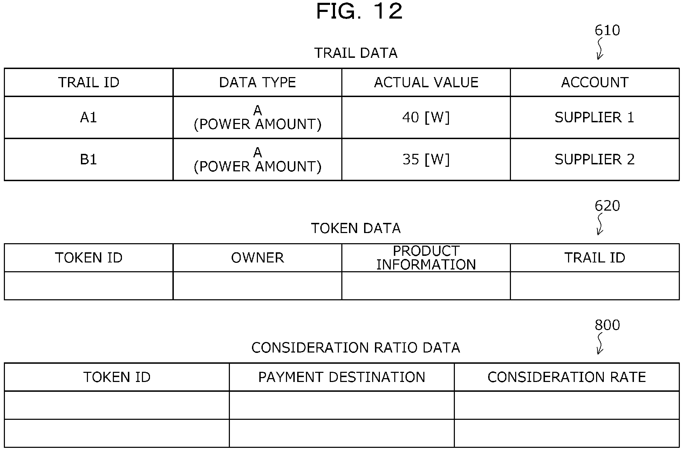

Similarly, it is assumed that the supplier-side terminal device 212 corresponding to the supplier 2 generate trail data 2 including a trail ID = B1, a record type Data Type = A (power amount), an actual value, and account information, based on the operation input of the user on the supplier side. It is assumed that the information processing system 200 share the trail data 2 by the plurality of nodes. Next, description of FIG. 12 will be made.

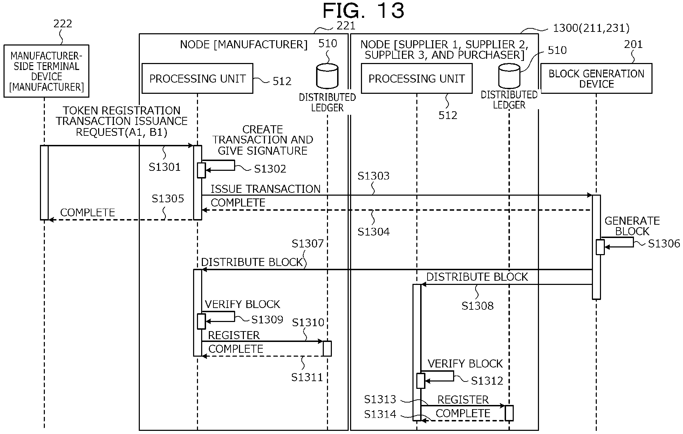

Specifically, FIG. 12 illustrates a state of the distributed ledger 510. As illustrated in FIG. 12, by trail data registration processing, the distributed ledger 510 stores the trail data 1 and the trail data 2 in the trail data store 610. As a result, the trail data 1 and the trail data 2 can be referred by the supplier-side management device 211, the manufacturer-side management device 221, the purchaser-side management device 231, or the like. The supplier-side management device 211, the manufacturer-side management device 221, the purchaser-side management device 231, or the like can specify the actual value based on the trail data. Next, description of FIG. 13 will be made.

Specifically, FIG. 13 illustrates a sequence diagram illustrating an example of a token registration processing procedure for registering a token, in the information processing system 200. In FIG. 13, in response to production of a product, the user on the manufacturer side inputs a correspondence relationship between product information representing the product and trail IDs = A1 and B1 representing trail data regarding the product, into the manufacturer-side terminal device 222. The product information is, for example, a uniform resource identifier (URI), individual identification information of a product, or the like.

The manufacturer-side terminal device 222 generates a token, based on the operation input of the user on the manufacturer side. In the example in FIG. 13, the manufacturer-side terminal device 222 generates a token 1 including the product information representing the product and the trail IDs = A1 and B1 representing the trail data regarding the product.

The manufacturer-side terminal device 222 transmits a token registration transaction issuance request including the generated token 1 to the manufacturer-side management device 221 to be the node (step S1301). Upon receiving the token registration transaction issuance request, the manufacturer-side management device 221 generates a token registration transaction including the token 1 and gives a signature (step S1302). The manufacturer-side management device 221 issues the token registration transaction to the block generation device 201 (step S1303).

Upon receiving the token registration transaction, the block generation device 201 transmits the completion notification to the manufacturer-side management device 221 (step S1304). Upon receiving the completion notification, the manufacturer-side management device 221 transmits the completion notification to the manufacturer-side terminal device 222 (step S1305).

Upon receiving the token registration transaction, the block generation device 201 generates a block including the token 1 (step S1306). The block generation device 201 distributes the generated block to the manufacturer-side management device 221 (step S1307). The block generation device 201 distributes the generated block to various devices 1300 to be nodes (step S1308).

For example, the various devices 1300 include the supplier-side management device 211 corresponding to the supplier 1, the supplier-side management device 211 corresponding to the supplier 2, the supplier-side management device 211 corresponding to the supplier 3, the purchaser-side management device 231, or the like.

Upon receiving the block by the processing unit 512, the manufacturer-side management device 221 verifies the received block (step S1309). When the block is verified to be valid by the processing unit 512, the manufacturer-side management device 221 registers the block in the distributed ledger 510 (step S1310). The manufacturer-side management device 221 receives the completion notification from the distributed ledger 510, by the processing unit 512 (step S1311).

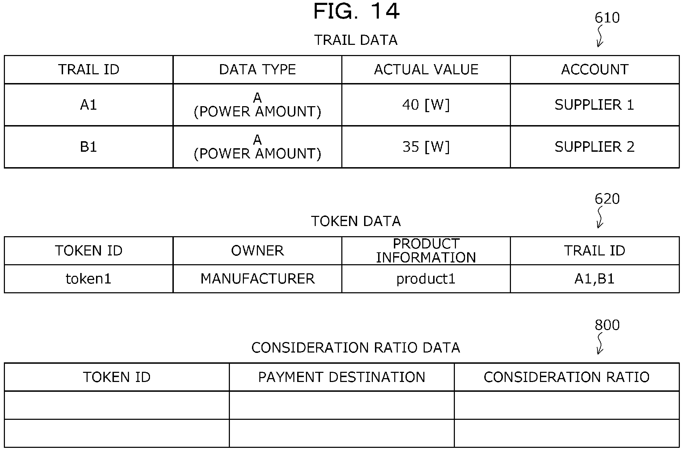

Upon receiving the block by the processing unit 512, the various devices 1300 verify the received block (step S1312). When the block is verified to be valid by the processing unit 512, the various devices 1300 register the block in the distributed ledger 510 (step S1313). The various devices 1300 receive the completion notification from the distributed ledger 510, by the processing unit 512 (step S1314). As a result, the information processing system 200 can share the token 1 by the plurality of nodes. Next, description of FIG. 14 will be made.

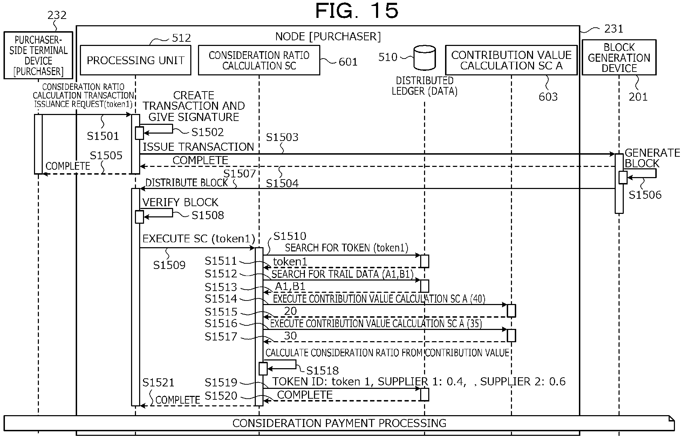

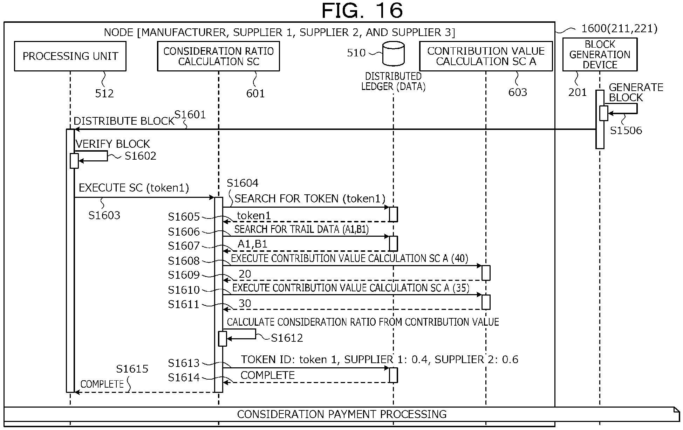

Specifically, FIG. 14 illustrates a state of the distributed ledger 510. As illustrated in FIG. 14, by token registration processing, the distributed ledger 510 stores the token 1 in the token data store 620. As a result, the token 1 can be referred by the supplier-side management device 211, the manufacturer-side management device 221, the purchaser-side management device 231, or the like. The supplier-side management device 211, the manufacturer-side management device 221, the purchaser-side management device 231, or the like can specify the trail data to be referred when the consideration is distributed based on the token 1. Next, description of FIGs. 15 and 16 will be made.

Specifically, FIGs. 15 and 16 illustrate sequence diagrams illustrating an example of a calculation processing procedure for calculating a consideration ratio at which the consideration is distributed, in the information processing system 200. In FIG. 15, in a case where the user on the purchaser side pays a consideration for the token 1, the user inputs the token ID to the purchaser-side terminal device 232. The purchaser-side terminal device 232 generates a consideration ratio calculation request including the token ID, based on the operation input of the user on the purchaser side. In the example in FIG. 15, the purchaser-side terminal device 232 generates the consideration ratio calculation request including the token ID of the token 1.

The purchaser-side terminal device 232 transmits a consideration ratio calculation transaction issuance request including the generated consideration ratio calculation request to the purchaser-side management device 231 to be the node (step S1501). Upon receiving the consideration ratio calculation transaction issuance request, the purchaser-side management device 231 generates a consideration ratio calculation transaction including the consideration ratio calculation request and gives a signature (step S1502). The purchaser-side management device 231 issues the consideration ratio calculation transaction to the block generation device 201 (step S1503).

Upon receiving the consideration ratio calculation transaction, the block generation device 201 transmits the completion notification to the purchaser-side management device 231 (step S1504). Upon receiving the completion notification, the purchaser-side management device 231 transmits the completion notification to the purchaser-side terminal device 232 (step S1505).

Upon receiving the consideration ratio calculation transaction, the block generation device 201 generates a block including the consideration ratio calculation request (step S1506). The block generation device 201 distributes the generated block to the purchaser-side management device 231 (step S1507).

Upon receiving the block by the processing unit 512, the purchaser-side management device 231 verifies the received block (step S1508). When the block is verified to be valid by the processing unit 512, the purchaser-side management device 231 executes the consideration ratio calculation SC 601 and inputs a token ID included in the block to the consideration ratio calculation SC 601 (step S1509).

The purchaser-side management device 231 searches for a token corresponding to the token ID, from the token data store 620, using the token ID as a key, by the consideration ratio calculation SC 601 (step S1510). The purchaser-side management device 231 acquires the token 1, by the consideration ratio calculation SC 601 (step S1511).

The purchaser-side management device 231 searches for trail data corresponding to the trail ID, from the trail data store 610, using the trail ID included in the token as a key, by the consideration ratio calculation SC 601 (step S1512). The purchaser-side management device 231 acquires the trail data 1 and the trail data 2, by the consideration ratio calculation SC 601 (step S1513).

The purchaser-side management device 231 executes the contribution value calculation SC A603, based on the trail data 1, by the consideration ratio calculation SC 601 (step S1514). The consideration ratio calculation SC 601 transfers, for example, the actual value = 40 to the contribution value calculation SC A603. The purchaser-side management device 231 acquires the contribution value = 20 calculated by the contribution value calculation SC A603, by the consideration ratio calculation SC 601 (step S1515).

The purchaser-side management device 231 executes the contribution value calculation SC A603, based on the trail data 2, by the consideration ratio calculation SC 601 (step S1516). The consideration ratio calculation SC 601 transfers, for example, the actual value = 35 to the contribution value calculation SC A603. The purchaser-side management device 231 acquires the contribution value = 30 calculated by the contribution value calculation SC A603, by the consideration ratio calculation SC 601 (step S1517).

The purchaser-side management device 231 calculates the consideration ratio for each participant, based on the acquired contribution value, by the consideration ratio calculation SC 601 (step S1518). The purchaser-side management device 231 calculates a consideration ratio xₙ = yₙ/yₛᵤₘ by the consideration ratio calculation SC 601, for example. The reference yₙ is a contribution value. The reference yₛᵤₘ is a sum of the contribution value. The reference n is a number of a participant.

Specifically, the purchaser-side management device 231 calculates a consideration ratio 20/(20 + 30) = 0.4 of the supplier 1 and a consideration ratio 30/(20 + 30) = 0.6 of the supplier 2, by the consideration ratio calculation SC 601. The purchaser-side management device 231 registers a correspondence relationship between the token ID and the calculated consideration ratio for each participant in the consideration ratio data store 800 of the distributed ledger 510, by the consideration ratio calculation SC 601 (step S1519).

The purchaser-side management device 231 receives a completion notification from the distributed ledger 510, by the consideration ratio calculation SC 601 (step S1520). The purchaser-side management device 231 transmits the completion notification to the processing unit 512, by the consideration ratio calculation SC 601 (step S1521). Thereafter, the purchaser-side management device 231 gives the consideration for each participant, based on the consideration ratio. Next, description of FIG. 16 will be made.

In FIG. 16, the block generation device 201 distributes the generated block to various devices 1600 to be nodes (step S1601). The various devices 1600 are, for example, the manufacturer-side management device 221, the supplier-side management device 211 corresponding to the supplier 1, the supplier-side management device 211 corresponding to the supplier 2, the supplier-side management device 211 corresponding to the supplier 3, or the like.

Upon receiving the block by the processing unit 512, the various devices 1600 verify the received block (step S1602). When the block is verified to be valid, by the processing unit 512, the various devices 1600 execute the consideration ratio calculation SC 601 and input a token ID included in the block to the consideration ratio calculation SC 601 (step S1603).

The various devices 1600 search for a token corresponding to the token ID, from the token data store 620, using the token ID as a key, by the consideration ratio calculation SC 601 (step S1604). The various devices 1600 acquire the token 1, by the consideration ratio calculation SC 601 (step S1605).

The various devices 1600 search for trail data corresponding to the trail ID, from the trail data store 610, using the trail ID included in the token 1 as a key, by the consideration ratio calculation SC 601 (step S1606). The various devices 1600 acquire the trail data 1 and the trail data 2, by the consideration ratio calculation SC 601 (step S1607).

The various devices 1600 execute the contribution value calculation SC A603, based on the trail data 1, by the consideration ratio calculation SC 601 (step S1608). The consideration ratio calculation SC 601 transfers, for example, the actual value = 40 to the contribution value calculation SC A603. The various devices 1600 acquire the contribution value = 20 calculated by the contribution value calculation SC A603, by the consideration ratio calculation SC 601 (step S1609).

The various devices 1600 execute the contribution value calculation SC A603, based on the trail data 2, by the consideration ratio calculation SC 601 (step S1610). The consideration ratio calculation SC 601 transfers, for example, the actual value = 35 to the contribution value calculation SC A603. The various devices 1600 acquire the contribution value = 30 calculated by the contribution value calculation SC A603, by the consideration ratio calculation SC 601 (step S1611).

The various devices 1600 calculate the consideration ratio for each participant, based on the acquired contribution value, by the consideration ratio calculation SC 601 (step S1612). The various devices 1600 calculate a consideration ratio xₙ = yₙ/yₛᵤₘ by the consideration ratio calculation SC 601, for example. The reference yₙ is a contribution value. The reference yₛᵤₘ is a sum of the contribution values including yₙ, belonging to the same contribution type as yₙ. The reference n is a number of a participant.

Specifically, the various devices 1600 calculate the consideration ratio 20/(20 + 30) = 0.4 of the supplier 1 and the consideration ratio 30/(20 + 30) = 0.6 of the supplier 2, by the consideration ratio calculation SC 601. The various devices 1600 register the correspondence relationship between the token ID and the calculated consideration ratio for each participant in the consideration ratio data store 800 of the distributed ledger 510, by the consideration ratio calculation SC 601 (step S1613).

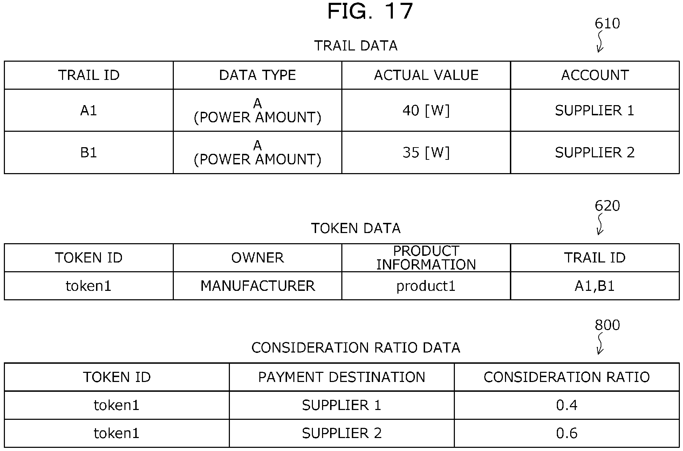

The various devices 1600 receive the completion notification from the distributed ledger 510, by the consideration ratio calculation SC 601 (step S1614). The various devices 1600 transmit the completion notification to the processing unit 512, by the consideration ratio calculation SC 601 (step S1615). Thereafter, the various devices 1600 give the consideration for each participant, based on the consideration ratio. Next, description of FIG. 17 will be made.

Specifically, FIG. 17 illustrates a state of the distributed ledger 510. As illustrated in FIG. 17, by consideration ratio calculation processing, the distributed ledger 510 stores the consideration ratio for each participant, in the consideration ratio data store 800. As a result, the consideration ratio can be referred by the supplier-side management device 211, the manufacturer-side management device 221, the purchaser-side management device 231, or the like. The supplier-side management device 211, the manufacturer-side management device 221, the purchaser-side management device 231, or the like can appropriately distribute the consideration, based on the consideration ratio.

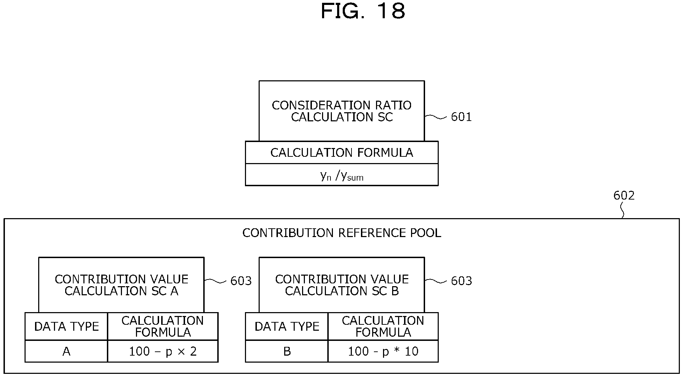

In this way, the information processing system 200 can appropriately distribute the consideration to each participant, from a viewpoint of the CO₂ reduction amount resulting from the power amount. Next, description of FIG. 18 will be made.

In FIG. 18, it is assumed that it is desired to appropriately distribute the consideration to each participant, in consideration of the another viewpoint other than the CO₂ reduction amount resulting from the power amount. The another viewpoint is, for example, a CO₂ reduction amount resulting from the fuel amount. In this case, as in the SC registration processing illustrated in FIG. 9, it is assumed that the information processing system 200 register a contribution value calculation SC B603 regarding the another viewpoint other than the CO₂ reduction amount resulting from the power amount in the distributed ledger 510 and share the contribution value calculation SC B603 by the plurality of nodes.

Specifically, FIG. 18 illustrates a state of the distributed ledger 510. As illustrated in FIG. 18, by the SC registration processing, the distributed ledger 510 stores the contribution value calculation SC B603 in the contribution reference pool 602. As a result, the contribution value calculation SC B603 can be referred by the supplier-side management device 211, the manufacturer-side management device 221, the purchaser-side management device 231, or the like. The contribution value can be calculated based on the actual value, by the supplier-side management device 211, the manufacturer-side management device 221, the purchaser-side management device 231, or the like.

The information processing system 200 can share the contribution value calculation SC B603 by the supplier-side management device 211, the manufacturer-side management device 221, the purchaser-side management device 231, or the like, without affecting the existing contribution value calculation SC A603 and the consideration ratio calculation SC 601. Therefore, the information processing system 200 does not need to rewrite the SC and can reduce cost. Since the information processing system 200 does not need to rewrite the SC, the information processing system 200 can easily suppress occurrence of a program bug and can improve reliability.

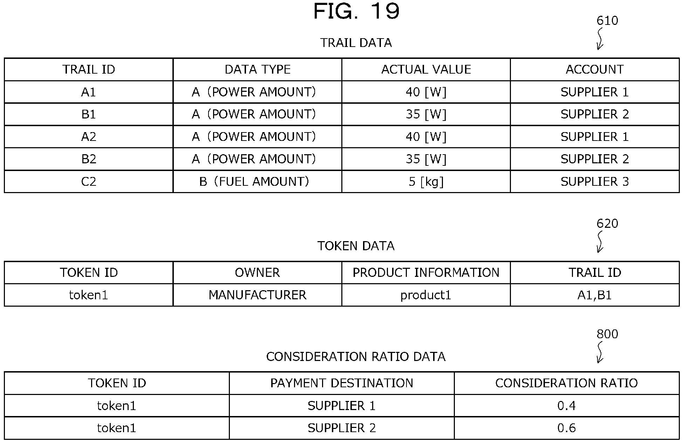

The contribution value calculation SC B603 includes Data Type that is a record type of an actual value and a calculation formula that can calculate a contribution value based on the actual value. The calculation formula calculates, for example, contribution value = CO₂ reduction amount. Specifically, the calculation formula is 100 - p * 10. The reference p is an actual value. The actual value is, for example, the fuel amount. Since the CO₂ reduction amount is larger as the fuel amount is smaller, the contribution value increases. Next, description of FIG. 19 will be made.

In FIG. 19, it is assumed that the supplier-side terminal device 212 corresponding to the supplier 1 generate trail data 3, as in the trail data registration processing illustrated in FIG. 11. The trail data 3 includes, for example, a trail ID = A2, a record type Data Type = A (power amount), an actual value, and account information, based on the operation input of the user on the supplier side. It is assumed that the information processing system 200 register the trail data 3 in the distributed ledger 510 and share the trail data 3 by the plurality of nodes, as in the trail data registration processing illustrated in FIG. 11.

Furthermore, it is assumed that the supplier-side terminal device 212 corresponding to the supplier 2 generate trail data 4, as in the trail data registration processing illustrated in FIG. 11. The trail data 4 includes, for example, a trail ID = B2, a record type Data Type = A (power amount), an actual value, and account information, based on the operation input of the user on the supplier side. It is assumed that the information processing system 200 register the trail data 4 in the distributed ledger 510 and share the trail data 4 by the plurality of nodes, as in the trail data registration processing illustrated in FIG. 11.

Furthermore, it is assumed that the supplier-side terminal device 212 corresponding to the supplier 3 generate trail data 5, as in the trail data registration processing illustrated in FIG. 11. The trail data 5 includes, for example, a trail ID = C2, a record type Data Type = B (fuel amount), an actual value, and account information, based on the operation input of the user on the supplier side. It is assumed that the information processing system 200 register the trail data 5 in the distributed ledger 510 and share the trail data 5 by the plurality of nodes, as in the trail data registration processing illustrated in FIG. 11.

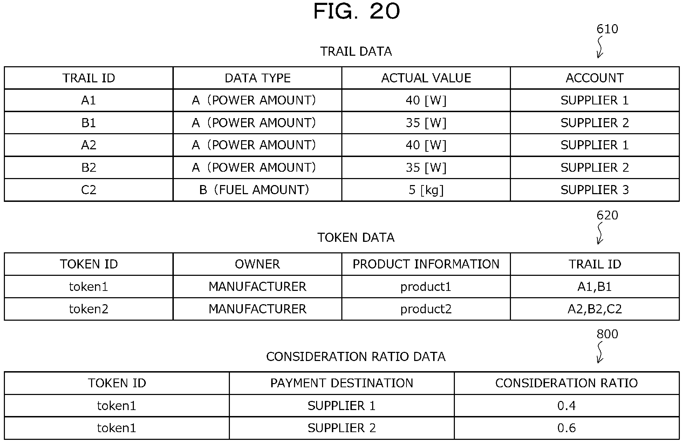

Specifically, FIG. 19 illustrates a state of the distributed ledger 510. As illustrated in FIG. 19, by the trail data registration processing, the distributed ledger 510 stores the trail data 3, the trail data 4, and the trail data 5 in the trail data store 610. As a result, the trail data 3, the trail data 4, and the trail data 5 can be referred by the supplier-side management device 211, the manufacturer-side management device 221, the purchaser-side management device 231, or the like. The supplier-side management device 211, the manufacturer-side management device 221, the purchaser-side management device 231, or the like can specify the actual value based on the trail data. Next, description of FIG. 20 will be made.

In FIG. 20, in response to additional production of the product, the user on the manufacturer side inputs a correspondence relationship between product information representing the product and a trail ID = A2, B2, and C2 representing trail data regarding the product, to the manufacturer-side terminal device 222. The manufacturer-side terminal device 222 generates the token 2 including the product information representing the product and the trail ID = A2, B2, and C2 representing the trail data regarding the product. It is assumed that the information processing system 200 register the token 2 in the distributed ledger 510 and share the token 2 by the plurality of nodes, as in the token registration processing illustrated in FIG. 13.

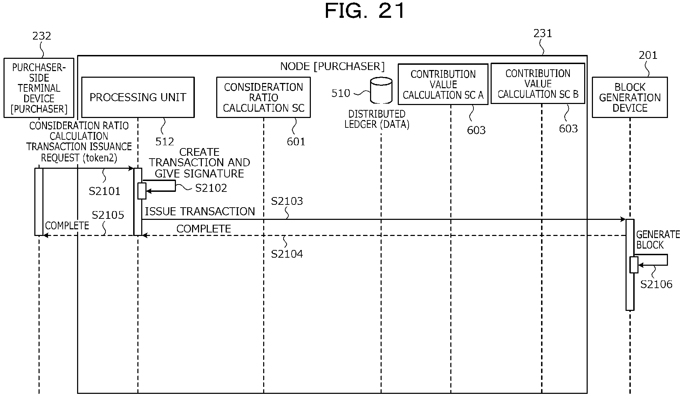

Specifically, FIG.20 illustrates a state of the distributed ledger 510. As illustrated in FIG. 20, by the token registration processing, the distributed ledger 510 stores a new token 2 in the token data store 620. As a result, the new token 2 can be referred by the supplier-side management device 211, the manufacturer-side management device 221, the purchaser-side management device 231, or the like. The supplier-side management device 211, the manufacturer-side management device 221, the purchaser-side management device 231, or the like can specify the trail data to be referred when the consideration is distributed based on the new token 2. Next, description of FIGs. 21 to 23 will be made.

Specifically, FIGs. 21 to 23 illustrate sequence diagrams illustrating an example of a calculation processing procedure for calculating a consideration ratio at which the consideration is distributed, in the information processing system 200. In FIG. 21, in a case where the user on the purchaser side pays a consideration for the token 2, the user inputs the token ID to the purchaser-side terminal device 232. The purchaser-side terminal device 232 generates a consideration ratio calculation request including the token ID, based on the operation input of the user on the purchaser side. In the example in FIG. 21, the purchaser-side terminal device 232 generates a consideration ratio calculation request including the token ID of the token 2.

The purchaser-side terminal device 232 transmits a consideration ratio calculation transaction issuance request including the generated consideration ratio calculation request to the purchaser-side management device 231 to be the node (step S2101). Upon receiving the consideration ratio calculation transaction issuance request, the purchaser-side management device 231 generates a consideration ratio calculation transaction including the consideration ratio calculation request and gives a signature (step S2102) . The purchaser-side management device 231 issues the consideration ratio calculation transaction to the block generation device 201 (step S2103).

Upon receiving the consideration ratio calculation transaction, the block generation device 201 transmits the completion notification to the purchaser-side management device 231 (step S2104). Upon receiving the completion notification, the purchaser-side management device 231 transmits the completion notification to the purchaser-side terminal device 232 (step S2105).

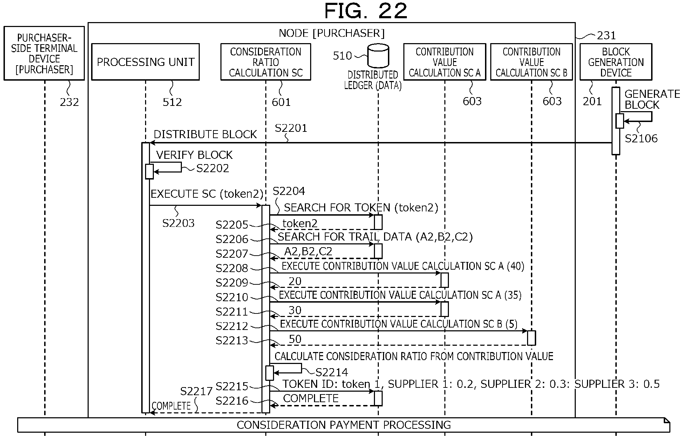

Upon receiving the consideration ratio calculation transaction, the block generation device 201 generates a block including the consideration ratio calculation request (step S2106). Next, description of FIG. 22 will be made.

In FIG. 22, the block generation device 201 distributes the generated block to the purchaser-side management device 231 (step S2201) . Upon receiving the block by the processing unit 512, the purchaser-side management device 231 verifies the received block (step S2202). When the block is verified to be valid by the processing unit 512, the purchaser-side management device 231 executes the consideration ratio calculation SC 601 and inputs a token ID included in the block to the consideration ratio calculation SC 601 (step S2203).

The purchaser-side management device 231 searches for a token corresponding to the token ID, from the token data store 620, using the token ID as a key, by the consideration ratio calculation SC 601 (step S2204). The purchaser-side management device 231 acquires the token 2, by the consideration ratio calculation SC 601 (step S2205).

The purchaser-side management device 231 searches for trail data corresponding to the trail ID, from the trail data store 610, using the trail ID included in the token 2 as a key, by the consideration ratio calculation SC 601 (step S2206). The purchaser-side management device 231 acquires the trail data 3, the trail data 4, and the trail data 5, by the consideration ratio calculation SC 601 (step S2207).

The purchaser-side management device 231 executes the contribution value calculation SC A603, based on the trail data 3, by the consideration ratio calculation SC 601 (step S2208). The consideration ratio calculation SC 601 transfers, for example, the actual value = 40 to the contribution value calculation SC A603. The purchaser-side management device 231 acquires the contribution value = 20 calculated by the contribution value calculation SC A603, by the consideration ratio calculation SC 601 (step S2209).

The purchaser-side management device 231 executes the contribution value calculation SC A603, based on the trail data 4, by the consideration ratio calculation SC 601 (step S2210). The consideration ratio calculation SC 601 transfers, for example, the actual value = 35 to the contribution value calculation SC A603. The purchaser-side management device 231 acquires the contribution value = 30 calculated by the contribution value calculation SC A603, by the consideration ratio calculation SC 601 (step S2211).

The purchaser-side management device 231 executes the contribution value calculation SC B603, based on the trail data 5, by the consideration ratio calculation SC 601 (step S2212). The consideration ratio calculation SC 601 transfers, for example, the actual value = 5 to the contribution value calculation SC B603. The purchaser-side management device 231 acquires the contribution value = 50 calculated by the contribution value calculation SC B603, by the consideration ratio calculation SC 601 (step S2213).

The purchaser-side management device 231 calculates the consideration ratio for each participant, based on the acquired contribution value, by the consideration ratio calculation SC 601 (step S2214). Specifically, the purchaser-side management device 231 calculates the consideration ratio of the supplier 1 20/(20 + 30 + 50) = 0.2, by the consideration ratio calculation SC 601. Specifically, the purchaser-side management device 231 calculates the consideration ratio of the supplier 2 30/(20 + 30 + 50) = 0.3, by the consideration ratio calculation SC 601. Specifically, the purchaser-side management device 231 calculates the consideration ratio of the supplier 3 50/(20 + 30 + 50) = 0.5, by the consideration ratio calculation SC 601.

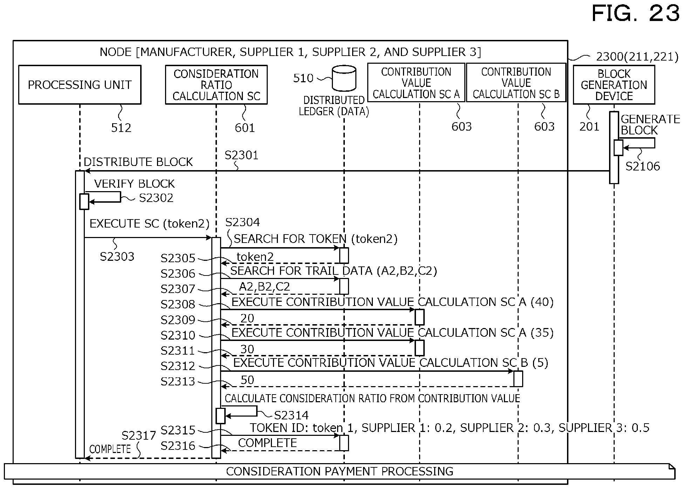

The purchaser-side management device 231 registers a correspondence relationship between the token ID and the calculated consideration ratio for each participant in the consideration ratio data store 800 of the distributed ledger 510, by the consideration ratio calculation SC 601 (step S2215). The purchaser-side management device 231 receives the completion notification from the distributed ledger 510, by the consideration ratio calculation SC 601 (step S2216). The purchaser-side management device 231 transmits the completion notification to the processing unit 512, by the consideration ratio calculation SC 601 (step S2217). Thereafter, the purchaser-side management device 231 gives the consideration for each participant, based on the consideration ratio. Next, description of FIG. 23 will be made.

In FIG. 23, the block generation device 201 distributes the generated block to various devices 2300 to be nodes (step S2301). The various devices 2300 are, for example, the manufacturer-side management device 221, the supplier-side management device 211 corresponding to the supplier 1, the supplier-side management device 211 corresponding to the supplier 2, the supplier-side management device 211 corresponding to the supplier 3, or the like.

Upon receiving the block by the processing unit 512, the various devices 2300 verify the received block (step S2302). When the block is verified to be valid, by the processing unit 512, the various devices 2300 execute the consideration ratio calculation SC 601 and input a token ID included in the block to the consideration ratio calculation SC 601 (step S2303).

The various devices 2300 search for a token corresponding to the token ID, from the token data store 620, using the token ID as a key, by the consideration ratio calculation SC 601 (step S2304). The various devices 2300 acquire the token 2, by the consideration ratio calculation SC 601 (step S2305).

The various devices 2300 search for trail data corresponding to the trail ID, from the trail data store 610, using the trail ID included in the token 2 as a key, by the consideration ratio calculation SC 601 (step S2306). The various devices 2300 acquire the trail data 3, the trail data 4, and the trail data 5, by the consideration ratio calculation SC 601 (step S2307).

The various devices 2300 execute the contribution value calculation SC A603, based on the trail data 3, by the consideration ratio calculation SC 601 (step S2308). The consideration ratio calculation SC 601 transfers, for example, the actual value = 40 to the contribution value calculation SC A603. The various devices 2300 acquire the contribution value = 20 calculated by the contribution value calculation SC A603, by the consideration ratio calculation SC 601 (step S2309).

The various devices 2300 execute the contribution value calculation SC A603, based on the trail data 4, by the consideration ratio calculation SC 601 (step S2310). The consideration ratio calculation SC 601 transfers, for example, the actual value = 35 to the contribution value calculation SC A603. The various devices 2300 acquire the contribution value = 30 calculated by the contribution value calculation SC A603, by the consideration ratio calculation SC 601 (step S2311).

The various devices 2300 execute the contribution value calculation SC B603, based on the trail data 5, by the consideration ratio calculation SC 601 (step S2312). The consideration ratio calculation SC 601 transfers, for example, the actual value = 5 to the contribution value calculation SC B603. The various devices 2300 acquire the contribution value = 50 calculated by the contribution value calculation SC B603, by the consideration ratio calculation SC 601 (step S2313).

The various devices 2300 calculate the consideration ratio for each participant, based on the acquired contribution value, by the consideration ratio calculation SC 601 (step S2314). Specifically, the various devices 2300 calculate the consideration ratio of the supplier 1, 20/(20 + 30 + 50) = 0.2, by the consideration ratio calculation SC 601. Specifically, the various devices 2300 calculate the consideration ratio of the supplier 2, 30/(20 + 30 + 50) = 0.3, by the consideration ratio calculation SC 601. Specifically, the various devices 2300 calculate the consideration ratio of the supplier 3, 50/(20 + 30 + 50) = 0.5, by the consideration ratio calculation SC 601.

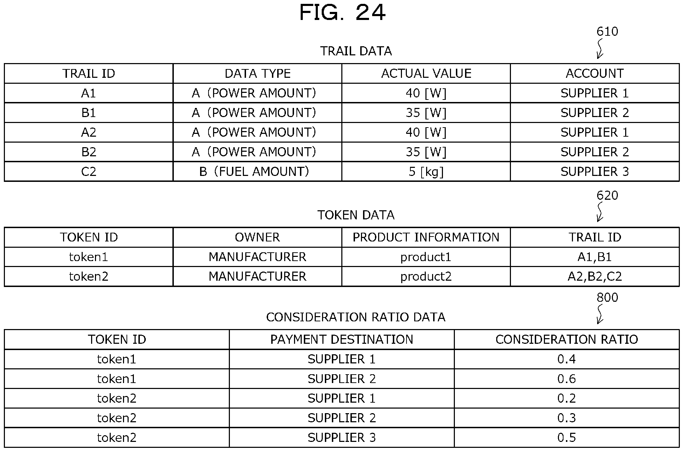

The various devices 2300 register the correspondence relationship between the token ID and the calculated consideration ratio for each participant in the consideration ratio data store 800 of the distributed ledger 510, by the consideration ratio calculation SC 601 (step S2315). The various devices 2300 receive the completion notification from the distributed ledger 510, by the consideration ratio calculation SC 601 (step S2316). The various devices 2300 transmit the completion notification to the processing unit 512, by the consideration ratio calculation SC 601 (step S2317). Thereafter, the various devices 2300 give the consideration for each participant, based on the consideration ratio. Next, description of FIG. 24 will be made.

Specifically, FIG. 24 illustrates a state of the distributed ledger 510. As illustrated in FIG. 24, by the consideration ratio calculation processing, the distributed ledger 510 stores the consideration ratio for each participant, in the consideration ratio data store 800, for the token 2. As a result, the consideration ratio can be referred by the supplier-side management device 211, the manufacturer-side management device 221, the purchaser-side management device 231, or the like. The supplier-side management device 211, the manufacturer-side management device 221, the purchaser-side management device 231, or the like can appropriately distribute the consideration, based on the consideration ratio.

In this way, the information processing system 200 can calculate a common contribution value from each of the viewpoint of the CO₂ reduction amount resulting from the power amount and the viewpoint of the CO₂ reduction amount resulting from the fuel amount and can appropriately distribute the consideration to each participant. The information processing system 200 does not need to rewrite the SC and can reduce cost. Since the information processing system 200 does not need to rewrite the SC, the information processing system 200 can easily suppress occurrence of a program bug and can improve reliability. The information processing system 200 can appropriately distribute the consideration to each participant, without affecting the existing contribution value calculation SC A603 and the consideration ratio calculation SC 601.

### (Second Operation Example of Information Processing System 200)

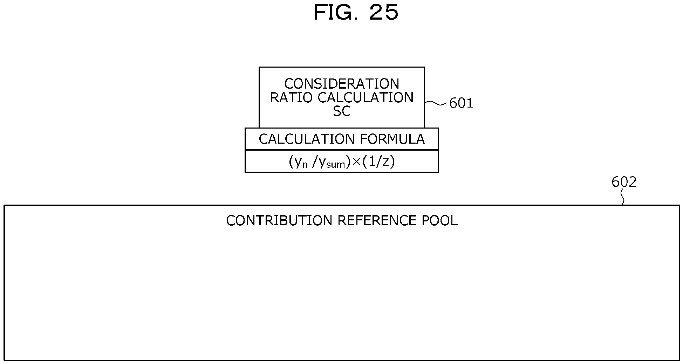

Next, a second operation example of the information processing system 200 will be described with reference to FIGs. 25 to 33. The first operation example corresponds to a case where the number of contribution types (Target Type) of the contribution value is one. The second operation example corresponds to a case where there are two or more contribution types of the contribution value. For example, it is considered that the contribution type is a plastic reduction amount or the like, in addition to the CO₂ reduction amount. In the following description, the plastic reduction amount may be referred to as "plastic reduction amount".

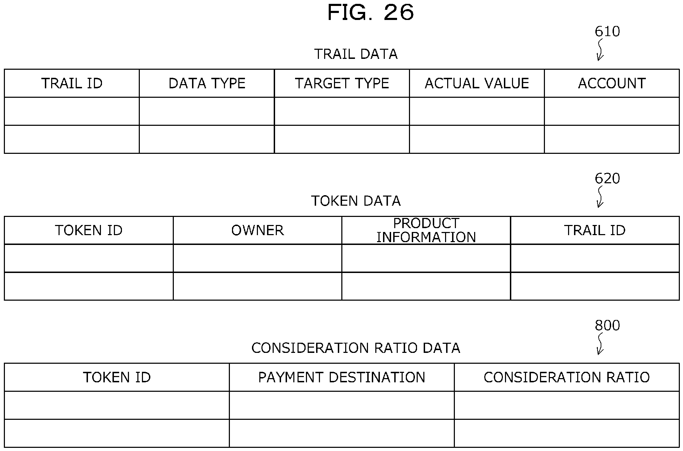

FIGs. 25 to 33 are explanatory diagrams illustrating the second operation example of the information processing system 200. Specifically, FIGs. 25 and 26 illustrate an initial state of the distributed ledger 510. As illustrated in FIG. 25, the distributed ledger 510 stores the consideration ratio calculation SC 601. The consideration ratio calculation SC 601 includes a calculation formula. The calculation formula is different from that of the first operation example. The distributed ledger 510 includes the contribution reference pool 602. Next, description of FIG. 26 will be made.

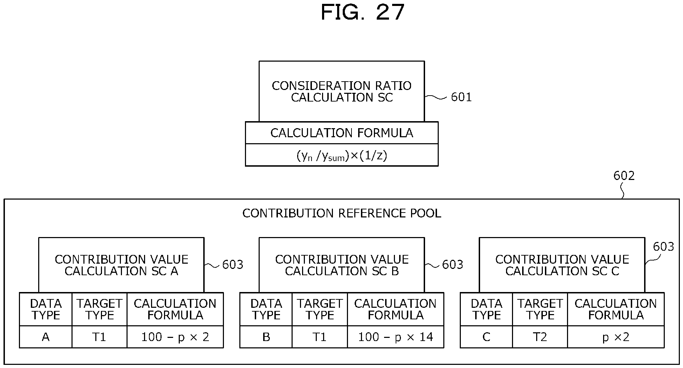

As illustrated in FIG. 26, the distributed ledger 510 stores the trail data store 610, the token data store 620, and the consideration ratio data store 800. The trail data store 610 further includes a field of Target Type. In the field of Target Type, "Target Type" representing a contribution type of a contribution value is set. In the initial state, the trail data store 610 is empty. The token data store 620 is empty. The consideration ratio data store 800 is empty. Next, description of FIG. 27 will be made.

In FIG. 27, as in the SC registration processing illustrated in FIG. 9, it is assumed that the information processing system 200 register the contribution value calculation SC A603 regarding the viewpoint of the CO₂ reduction amount resulting from the power amount in the distributed ledger 510 and share the contribution value calculation SC A603 by the plurality of nodes.

Furthermore, as in the SC registration processing illustrated in FIG. 9, it is assumed that the information processing system 200 register the contribution value calculation SC B603 regarding the viewpoint of the CO₂ reduction amount resulting from the fuel amount in the distributed ledger 510 and share the contribution value calculation SC B603 by the plurality of nodes.

Furthermore, as in the SC registration processing illustrated in FIG. 9, it is assumed that the information processing system 200 register a contribution value calculation SC C603 regarding a viewpoint of a plastic reduction amount resulting from a plant-based raw material usage in the distributed ledger 510 and share the contribution value calculation SC C603 by the plurality of nodes.

Specifically, FIG. 27 illustrates a state of the distributed ledger 510. As illustrated in FIG. 27, by the SC registration processing, the distributed ledger 510 stores the contribution value calculation SC A603, the contribution value calculation SC B603, and the contribution value calculation SC C603, in the contribution reference pool 602. As a result, the contribution value calculation SC A603, the contribution value calculation SC B603, and the contribution value calculation SC C603 can be referred by the supplier-side management device 211, the manufacturer-side management device 221, the purchaser-side management device 231, or the like. A contribution value based on the same reference can be calculated, based on the actual values from different viewpoints, by the supplier-side management device 211, the manufacturer-side management device 221, the purchaser-side management device 231, or the like.

The contribution value calculation SC A603 includes Data Type that is the record type of the actual value, Target Type that is the contribution type of the contribution value, and a calculation formula that enables to calculate the contribution value based on the actual value. The calculation formula calculates, for example, contribution value = CO₂ reduction amount. Specifically, the calculation formula is 100 - p * 2. The reference p is an actual value. The actual value is, for example, a power amount. Since the CO₂ reduction amount is larger as the power amount is smaller, the contribution value increases.

The contribution value calculation SC B603 includes Data Type that is the record type of the actual value, Target Type that is the contribution type of the contribution value, and a calculation formula that enables to calculate the contribution value based on the actual value. The calculation formula calculates, for example, contribution value = CO₂ reduction amount. Specifically, the calculation formula is 100 - p * 14. The reference p is an actual value. The actual value is, for example, the fuel amount. Since the CO₂ reduction amount is larger as the fuel amount is smaller, the contribution value increases.

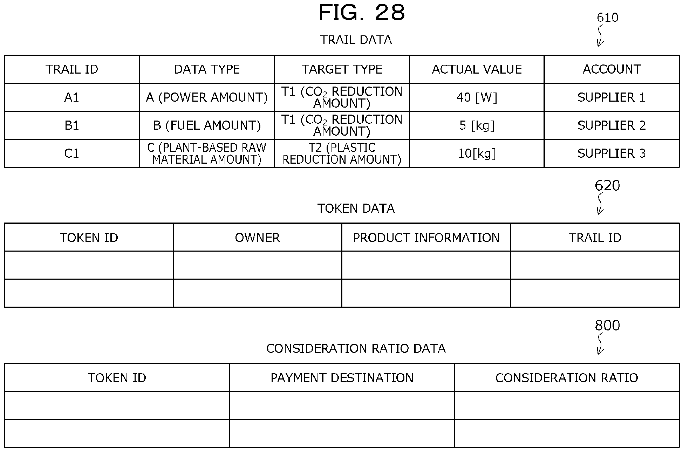

The contribution value calculation SC C603 includes Data Type that is the record type of the actual value, Target Type that is the contribution type of the contribution value, and a calculation formula that enables to calculate the contribution value based on the actual value. The calculation formula calculates, for example, contribution value = plastic reduction amount. Specifically, the calculation formula is p * 2. The reference p is an actual value. The actual value is, for example, the plant-based raw material usage. Since the plastic reduction amount is larger as the usage is larger, the contribution value increases. Next, description of FIG. 28 will be made.

In FIG. 28, it is assumed that the supplier-side terminal device 212 corresponding to the supplier 1 generate the trail data 1, based on the operation input of the user on the supplier side. The trail data 1 includes a trail ID = A1, a record type Data Type = A (power amount), a contribution type Target Type = T1 (CO₂ reduction amount), an actual value, and account information. It is assumed that the information processing system 200 share the trail data 1 by the plurality of nodes, as in the trail data registration processing illustrated in FIG. 11.

Furthermore, it is assumed that the supplier-side terminal device 212 corresponding to the supplier 2 generate the trail data 2, based on the operation input of the user on the supplier side. The trail data 2 includes a trail ID = B1, a record type Data Type = B (fuel amount), a contribution type Target Type = T1 (CO₂ reduction amount), an actual value, and account information. It is assumed that the information processing system 200 share the trail data 2 by the plurality of nodes, as in the trail data registration processing illustrated in FIG. 11.

Furthermore, it is assumed that the supplier-side terminal device 212 corresponding to the supplier 3 generate the trail data 3, based on the operation input of the user on the supplier side. The trail data 3 includes a trail ID = C1, a record type Data Type = C (plant-based raw material amount), a contribution type Target Type = T2 (plastic reduction amount), an actual value, and account information. It is assumed that the information processing system 200 share the trail data 3 by the plurality of nodes, as in the trail data registration processing illustrated in FIG. 11.

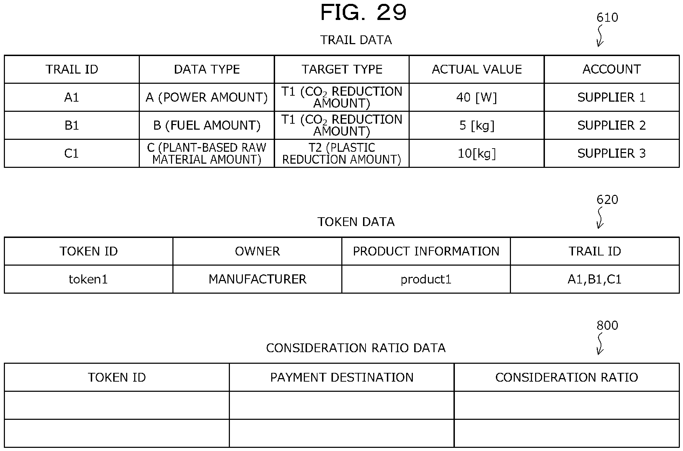

Specifically, FIG. 28 illustrates a state of the distributed ledger 510. As illustrated in FIG. 28, by the trail data registration processing, the distributed ledger 510 stores the trail data 1, the trail data 2, and the trail data 3 in the trail data store 610. As a result, the trail data 1, the trail data 2, and the trail data 3 can be referred by the supplier-side management device 211, the manufacturer-side management device 221, the purchaser-side management device 231, or the like. The supplier-side management device 211, the manufacturer-side management device 221, the purchaser-side management device 231, or the like can specify the actual value based on the trail data. Next, description of FIG. 29 will be made.

In FIG. 29, in response to production of the product, the user on the manufacturer side inputs a correspondence relationship between product information representing the product and trail IDs = A1, B1, and C1 representing trail data regarding the product, to the manufacturer-side terminal device 222. The manufacturer-side terminal device 222 generates the token 1 including the product information representing the product and the trail IDs = A1, B1, and C1 representing the trail data regarding the product. It is assumed that the information processing system 200 register the token 1 in the distributed ledger 510 and share the token 1 by the plurality of nodes, as in the token registration processing illustrated in FIG. 13.

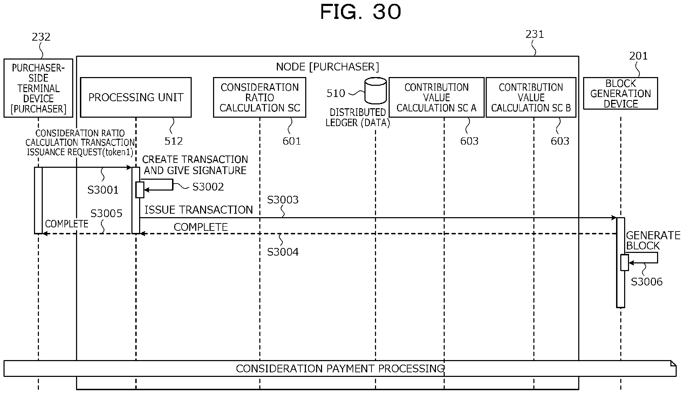

Specifically, FIG. 29 illustrates a state of the distributed ledger 510. As illustrated in FIG. 29, by the token registration processing, the distributed ledger 510 stores the token 1 in the token data store 620. As a result, the token 1 can be referred by the supplier-side management device 211, the manufacturer-side management device 221, the purchaser-side management device 231, or the like. The supplier-side management device 211, the manufacturer-side management device 221, the purchaser-side management device 231, or the like can specify the trail data to be referred when the consideration is distributed based on the token 1. Next, description of FIGs. 30 to 32 will be made.

Specifically, FIGs. 30 to 32 illustrate sequence diagrams illustrating an example of a calculation processing procedure for calculating the consideration ratio at which the consideration is distributed, in the information processing system 200. In FIG. 30, in a case where the user on the purchaser side pays a consideration for the token 1, the user inputs the token ID to the purchaser-side terminal device 232. The purchaser-side terminal device 232 generates a consideration ratio calculation request including the token ID, based on the operation input of the user on the purchaser side. In the example in FIG. 30, the purchaser-side terminal device 232 generates the consideration ratio calculation request including the token ID of the token 1.

The purchaser-side terminal device 232 transmits a consideration ratio calculation transaction issuance request including the generated consideration ratio calculation request to the purchaser-side management device 231 to be the node (step S3001). Upon receiving the consideration ratio calculation transaction issuance request, the purchaser-side management device 231 generates a consideration ratio calculation transaction including the consideration ratio calculation request and gives a signature (step S3002). The purchaser-side management device 231 issues the consideration ratio calculation transaction to the block generation device 201 (step S3003).

Upon receiving the consideration ratio calculation transaction, the block generation device 201 transmits the completion notification to the purchaser-side management device 231 (step S3004). Upon receiving the completion notification, the purchaser-side management device 231 transmits the completion notification to the purchaser-side terminal device 232 (step S3005).

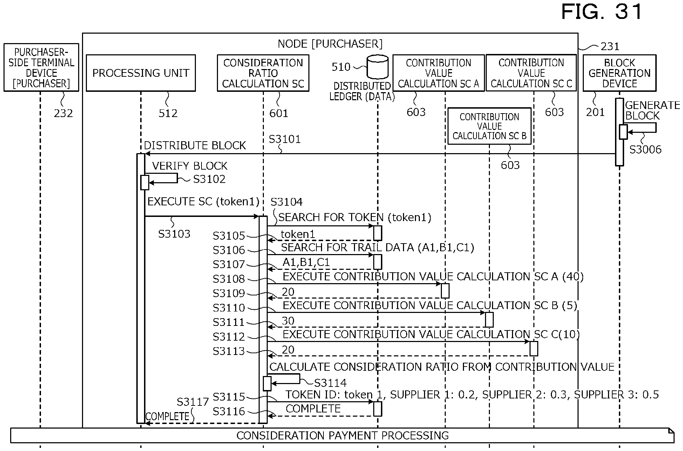

Upon receiving the consideration ratio calculation transaction, the block generation device 201 generates a block including the consideration ratio calculation request (step S3006). Next, description of FIG. 31 will be made.

In FIG. 31, the block generation device 201 distributes the generated block to the purchaser-side management device 231 (step S3101) . Upon receiving the block by the processing unit 512, the purchaser-side management device 231 verifies the received block (step S3102). When the block is verified to be valid by the processing unit 512, the purchaser-side management device 231 executes the consideration ratio calculation SC 601 and inputs a token ID included in the block to the consideration ratio calculation SC 601 (step S3103).

The purchaser-side management device 231 searches for a token corresponding to the token ID, from the token data store 620, using the token ID as a key, by the consideration ratio calculation SC 601 (step S3104). The purchaser-side management device 231 acquires the token 1, by the consideration ratio calculation SC 601 (step S3105).

The purchaser-side management device 231 searches for trail data corresponding to the trail ID, from the trail data store 610, using the trail ID included in the token 1 as a key, by the consideration ratio calculation SC 601 (step S3106). The purchaser-side management device 231 acquires the trail data 1, the trail data 2, and the trail data 3, by the consideration ratio calculation SC 601 (step S3107).

The purchaser-side management device 231 executes the contribution value calculation SC A603 corresponding to a combination of the Data Type and the Target Type, based on the trail data 1, by the consideration ratio calculation SC 601 (step S3108). The consideration ratio calculation SC 601 transfers, for example, the actual value = 40 to the contribution value calculation SC A603. The purchaser-side management device 231 acquires the contribution value = 20 calculated by the contribution value calculation SC A603, by the consideration ratio calculation SC 601 (step S3109).

The purchaser-side management device 231 executes the contribution value calculation SC B603 corresponding to the combination of the Data Type and the Target Type, based on the trail data 2, by the consideration ratio calculation SC 601 (step S3110). The consideration ratio calculation SC 601 transfers, for example, the actual value = 5 to the contribution value calculation SC B603. The purchaser-side management device 231 acquires the contribution value = 30 calculated by the contribution value calculation SC B603, by the consideration ratio calculation SC 601 (step S3111).

The purchaser-side management device 231 executes the contribution value calculation SC C603 corresponding to the combination of the Data Type and the Target Type, based on the trail data 3, by the consideration ratio calculation SC 601 (step S3112). The consideration ratio calculation SC 601 transfers, for example, the actual value = 10 to the contribution value calculation SC C603. The purchaser-side management device 231 acquires the contribution value = 20 calculated by the contribution value calculation SC C603, by the consideration ratio calculation SC 601 (step S3113).

The purchaser-side management device 231 calculates the consideration ratio for each participant, based on the acquired contribution value, by the consideration ratio calculation SC 601 (step S3114). Specifically, the purchaser-side management device 231 calculates a consideration ratio xₙ = yₙ/yₛᵤₘ * 1/z. The reference z is the number of contribution types. The reference n is a number of a participant.

Specifically, the purchaser-side management device 231 calculates the consideration ratio of the supplier 1, 20/(20 + 30) * 1/2 = 0.2, by the consideration ratio calculation SC 601. Specifically, the purchaser-side management device 231 calculates the consideration ratio of the supplier 2, 30 (20 + 30) * 1/2 = 0.3, by the consideration ratio calculation SC 601. Specifically, the purchaser-side management device 231 calculates the consideration ratio of the supplier 3, 20/20 * 1/2 = 0.5, by the consideration ratio calculation SC 601.

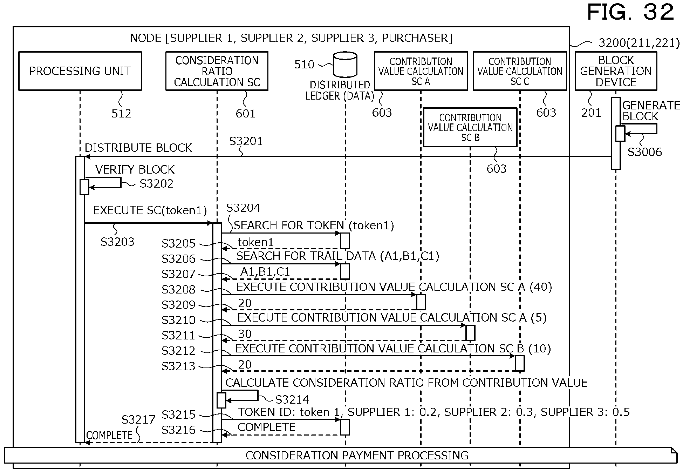

The purchaser-side management device 231 registers a correspondence relationship between the token ID and the calculated consideration ratio for each participant in the consideration ratio data store 800 of the distributed ledger 510, by the consideration ratio calculation SC 601 (step S3115). The purchaser-side management device 231 receives the completion notification from the distributed ledger 510, by the consideration ratio calculation SC 601 (step S3116). The purchaser-side management device 231 transmits the completion notification to the processing unit 512, by the consideration ratio calculation SC 601 (step S3117). Thereafter, the purchaser-side management device 231 gives the consideration for each participant, based on the consideration ratio. Next, description of FIG. 32 will be made.

In FIG. 32, the block generation device 201 distributes the generated block to various devices 3200 to be nodes (step S3201). The various devices 3200 are, for example, the manufacturer-side management device 221, the supplier-side management device 211 corresponding to the supplier 1, the supplier-side management device 211 corresponding to the supplier 2, the supplier-side management device 211 corresponding to the supplier 3, or the like.

Upon receiving the block by the processing unit 512, the various devices 3200 verify the received block (step S3202). When the block is verified to be valid, by the processing unit 512, the various devices 3200 execute the consideration ratio calculation SC 601 and input a token ID included in the block to the consideration ratio calculation SC 601 (step S3203).

The various devices 3200 search for a token corresponding to the token ID, from the token data store 620, using the token ID as a key, by the consideration ratio calculation SC 601 (step S3204). The various devices 3200 acquire the token 1, by the consideration ratio calculation SC 601 (step S3205).

The various devices 3200 search for trail data corresponding to the trail ID, from the trail data store 610, using the trail ID included in the token 1 as a key, by the consideration ratio calculation SC 601 (step S3206). The various devices 3200 acquire the trail data 1, the trail data 2, and the trail data 3, by the consideration ratio calculation SC 601 (step S3207).

The various devices 3200 execute the contribution value calculation SC A603 corresponding to the combination of the Data Type and the Target Type, based on the trail data 1, by the consideration ratio calculation SC 601 (step S3208). The consideration ratio calculation SC 601 transfers, for example, the actual value = 40 to the contribution value calculation SC A603. The various devices 3200 acquire the contribution value = 20 calculated by the contribution value calculation SC A603, by the consideration ratio calculation SC 601 (step S3209).

The various devices 3200 execute the contribution value calculation SC B603 corresponding to the combination of the Data Type and the Target Type, based on the trail data 2, by the consideration ratio calculation SC 601 (step S3210). The consideration ratio calculation SC 601 transfers, for example, the actual value = 5 to the contribution value calculation SC B603. The various devices 3200 acquire the contribution value = 30 calculated by the contribution value calculation SC B603, by the consideration ratio calculation SC 601 (step S3211).

The various devices 3200 execute the contribution value calculation SC C603 corresponding to the combination of the Data Type and the Target Type, based on the trail data 3, by the consideration ratio calculation SC 601 (step S3212). The consideration ratio calculation SC 601 transfers, for example, the actual value = 10 to the contribution value calculation SC C603. The various devices 3200 acquire the contribution value = 20 calculated by the contribution value calculation SC C603, by the consideration ratio calculation SC 601 (step S3213).

The various devices 3200 calculate the consideration ratio for each participant, based on the acquired contribution value, by the consideration ratio calculation SC 601 (step S3214). Specifically, the various devices 3200 calculate the consideration ratio of the supplier 1, 20/(20 + 30) * 1/2 = 0.2, by the consideration ratio calculation SC 601. Specifically, the various devices 3200 calculate the consideration ratio of the supplier 2, 30 (20 + 30) * 1/2 = 0.3, by the consideration ratio calculation SC 601. Specifically, the various devices 3200 calculate the consideration ratio of the supplier 3, 20/20 * 1/2 = 0.5, by the consideration ratio calculation SC 601.

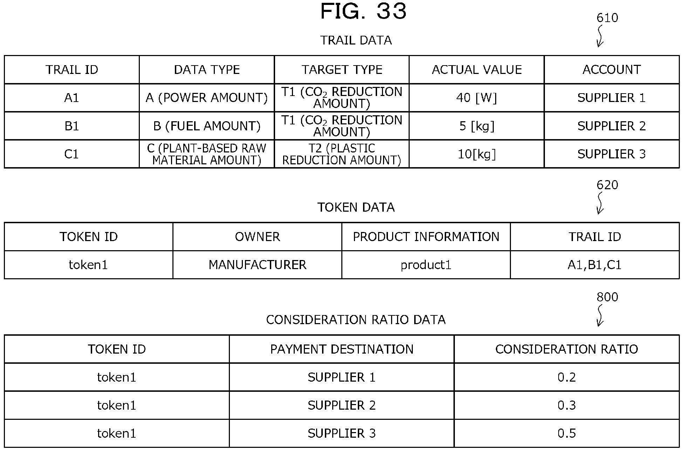

The various devices 3200 register a correspondence relationship between the token ID and the calculated consideration ratio for each participant in the consideration ratio data store 800 of the distributed ledger 510, by the consideration ratio calculation SC 601 (step S3215). The various devices 3200 receive the completion notification from the distributed ledger 510, by the consideration ratio calculation SC 601 (step S3216). The various devices 3200 transmit the completion notification to the processing unit 512, by the consideration ratio calculation SC 601 (step S3217). Thereafter, the various devices 3200 give the consideration for each participant, based on the consideration ratio. Next, description of FIG. 33 will be made.

Specifically, FIG. 33 illustrates a state of the distributed ledger 510. As illustrated in FIG. 33, by the consideration ratio calculation processing, the distributed ledger 510 stores the consideration ratio for each participant, in the consideration ratio data store 800, for the token 1. As a result, the consideration ratio can be referred by the supplier-side management device 211, the manufacturer-side management device 221, the purchaser-side management device 231, or the like. The supplier-side management device 211, the manufacturer-side management device 221, the purchaser-side management device 231, or the like can appropriately distribute the consideration, based on the consideration ratio.

In this way, the information processing system 200 can calculate a common contribution value from each of the viewpoint of the CO₂ reduction amount resulting from the power amount and the viewpoint of the CO₂ reduction amount resulting from the fuel amount. Furthermore, the information processing system 200 can calculate a common contribution value for each of the different contribution types of the CO₂ reduction amount and the plastic reduction amount. Therefore, the information processing system 200 can appropriately distribute the consideration, based on different combinations of the record types and the contribution types. The information processing system 200 does not need to rewrite the SC and can reduce cost. Since the information processing system 200 does not need to rewrite the SC, the information processing system 200 can easily suppress occurrence of a program bug and can improve reliability. The information processing system 200 can appropriately distribute the consideration to each participant, without affecting the existing contribution value calculation SC A603 and the consideration ratio calculation SC 601.

### (Third Operation Example of Information Processing System 200)

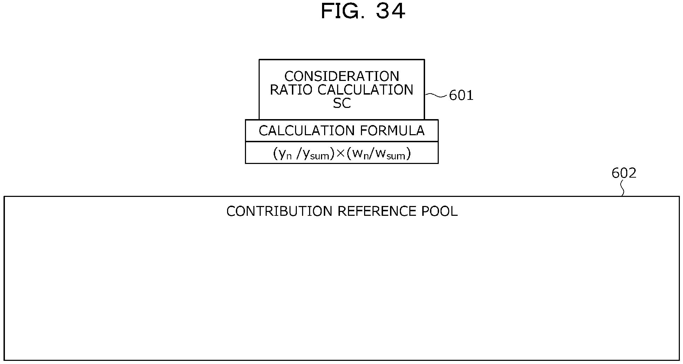

Next, a third operation example of the information processing system 200 will be described with reference to FIGs. 34 to 45. The third operation example corresponds to a case where a different weight is given for each contribution type. For example, the third operation example can make it easier to cope with a case where a contribution value of which contribution type is preferable to be focused changes, as going with the times.

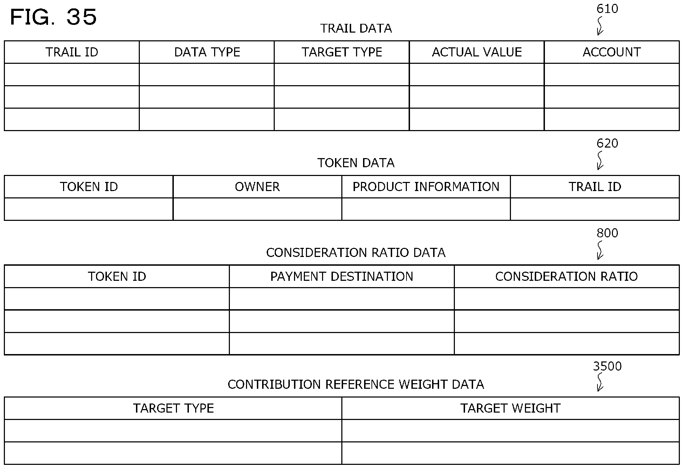

FIGs. 34 to 45 are explanatory diagrams illustrating the third operation example of the information processing system 200. Specifically, FIGs. 34 and 35 illustrate an initial state of the distributed ledger 510. As illustrated in FIG. 34, the distributed ledger 510 stores the consideration ratio calculation SC 601. The consideration ratio calculation SC 601 includes a calculation formula. The calculation formula is different from that of the first operation example. The calculation formula is, for example, yₙ/yₛᵤₘ * wₙ/wₛᵤₘ. The reference yₙ is a contribution value. The reference yₛᵤₘ is a sum of the contribution values including yₙ, belonging to the same contribution type as yₙ. The reference wₙ is a weight of the contribution value. The reference wₛᵤₘ is a sum of the weights of the contribution value. The reference n is a number of a participant. The distributed ledger 510 includes the contribution reference pool 602. Next, description of FIG. 35 will be made.

As illustrated in FIG. 35, the distributed ledger 510 stores the trail data store 610, the token data store 620, and the consideration ratio data store 800. The distributed ledger 510 further stores a contribution reference weight data store 3500.

The contribution reference weight data store 3500 includes fields of Target Type and Target Weight. In the contribution reference weight data store 3500, by setting information in each field for each contribution type, contribution reference weight data is stored as a record. In the field of Target Type, "Target Type" representing a contribution type of a contribution value is set. In the field of the Target Weight, "Target Weight" representing a contribution reference weight for the contribution type is set.

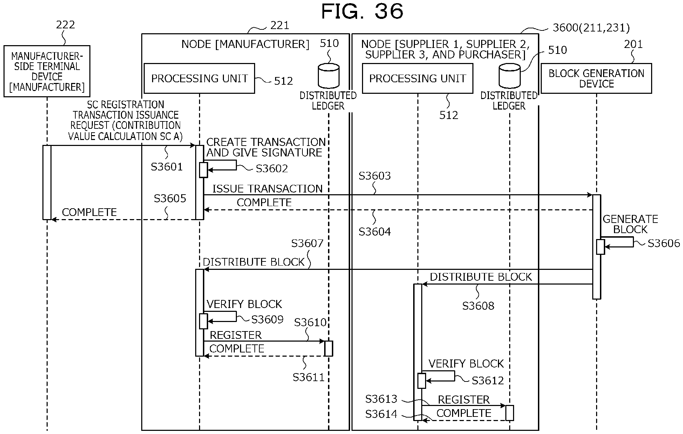

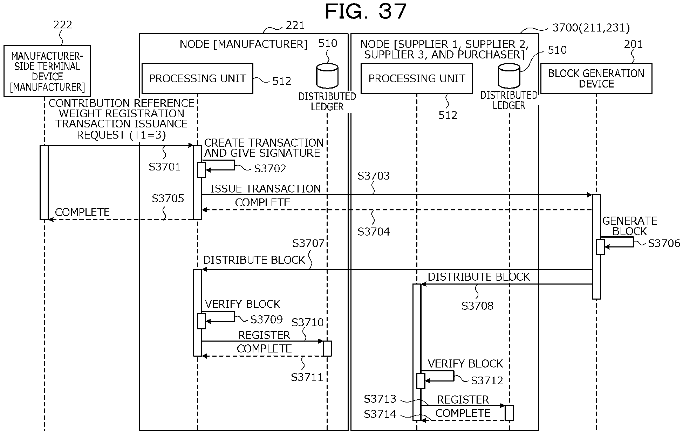

In the initial state, the trail data store 610 is empty. The token data store 620 is empty. The consideration ratio data store 800 is empty. The contribution reference weight data store 3500 is empty. Next, description of FIGs. 36 and 37 will be made.

Specifically, FIGs. 36 and 37 are sequence diagrams illustrating an example of an SC registration processing procedure for registering the contribution value calculation SC 603 and the contribution reference weight, in the information processing system 200. In FIG. 36, the manufacturer-side terminal device 222 generates the contribution value calculation SC 603, based on the operation input of the user on the manufacturer side. In the example in FIG. 36, the manufacturer-side terminal device 222 generates the contribution value calculation SC A603.

The manufacturer-side terminal device 222 transmits an SC registration transaction issuance request including the generated contribution value calculation SC A603 to the manufacturer-side management device 221 to be a node (step S3601). Upon receiving the SC registration transaction issuance request, the manufacturer-side management device 221 generates an SC registration transaction including the contribution value calculation SC A603 and gives a signature (step S3602). The manufacturer-side management device 221 issues the SC registration transaction to the block generation device 201 (step S3603).

Upon receiving the SC registration transaction, the block generation device 201 transmits the completion notification to the manufacturer-side management device 221 (step S3604). Upon receiving the completion notification, the manufacturer-side management device 221 transmits the completion notification to the manufacturer-side terminal device 222 (step S3605).

Upon receiving the SC registration transaction, the block generation device 201 generates a block including the contribution value calculation SC A603 (step S3606). The block generation device 201 distributes the generated block to the manufacturer-side management device 221 (step S3607). The block generation device 201 distributes the generated block to various devices 3600 to be nodes (step S3608).

For example, the various devices 3600 include the supplier-side management device 211 corresponding to the supplier 1, the supplier-side management device 211 corresponding to the supplier 2, the supplier-side management device 211 corresponding to the supplier 3, the purchaser-side management device 231, or the like.

Upon receiving the block by the processing unit 512, the manufacturer-side management device 221 verifies the received block (step S3609). When the block is verified to be valid by the processing unit 512, the manufacturer-side management device 221 registers the block in the distributed ledger 510 (step S3610). The manufacturer-side management device 221 receives the completion notification from the distributed ledger 510, by the processing unit 512 (step S3611).

Upon receiving the block by the processing unit 512, the various devices 3600 verify the received block (step S3612). When the block is verified to be valid by the processing unit 512, the various devices 3600 register the block in the distributed ledger 510 (step S3613). The various devices 3600 receive the completion notification from the distributed ledger 510, by the processing unit 512 (step S3614). As a result, the information processing system 200 can share the contribution value calculation SC 603 by the plurality of nodes. Next, description of FIG. 37 will be made.

In FIG. 37, the manufacturer-side terminal device 222 generates a contribution reference weight for a contribution type represented by the Target Type of the contribution reference weight, based on the operation input of the user on the manufacturer side. In the example in FIG. 37, the manufacturer-side terminal device 222 generates a contribution reference weight T1 = 3.

The manufacturer-side terminal device 222 transmits a contribution reference weight registration transaction issuance request including the generated contribution reference weight T1, to the manufacturer-side management device 221 to be the node (step S3701). Upon receiving the contribution reference weight registration transaction issuance request, the manufacturer-side management device 221 generates a contribution reference weight registration transaction including the contribution reference weight T1 and gives a signature (step S3702). The manufacturer-side management device 221 issues the contribution reference weight registration transaction to the block generation device 201 (step S3703).

Upon receiving the contribution reference weight registration transaction, the block generation device 201 transmits the completion notification to the manufacturer-side management device 221 (step S3704). Upon receiving the completion notification, the manufacturer-side management device 221 transmits the completion notification to the manufacturer-side terminal device 222 (step S3705).

Upon receiving the contribution reference weight registration transaction, the block generation device 201 generates a block including the contribution reference weight T1 (step S3706). The block generation device 201 distributes the generated block to the manufacturer-side management device 221 (step S3707). The block generation device 201 distributes the generated block to various devices 3700 to be nodes (step S3708).

For example, the various devices 3700 include the supplier-side management device 211 corresponding to the supplier 1, the supplier-side management device 211 corresponding to the supplier 2, the supplier-side management device 211 corresponding to the supplier 3, the purchaser-side management device 231, or the like.

Upon receiving the block by the processing unit 512, the manufacturer-side management device 221 verifies the received block (step S3709). When the block is verified to be valid by the processing unit 512, the manufacturer-side management device 221 registers the block in the distributed ledger 510 (step S3710). The manufacturer-side management device 221 receives the completion notification from the distributed ledger 510, by the processing unit 512 (step S3711).

Upon receiving the block by the processing unit 512, the various devices 3700 verify the received block (step S3712). When the block is verified to be valid by the processing unit 512, the various devices 3700 register the block in the distributed ledger 510 (step S3713). The various devices 3700 receive the completion notification from the distributed ledger 510, by the processing unit 512 (step S3714). As a result, the information processing system 200 can share the contribution reference weight T1 by the plurality of nodes.

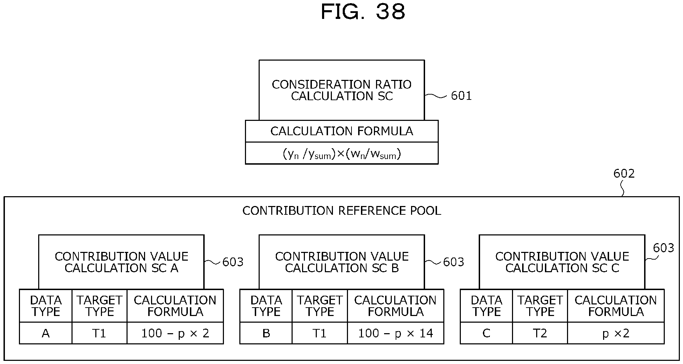

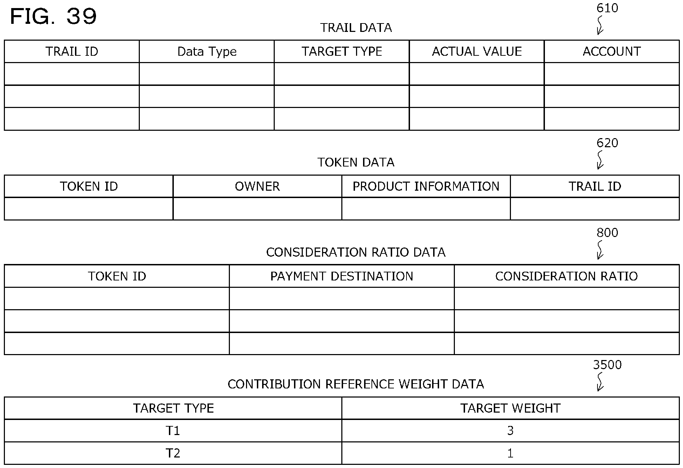

Furthermore, it is assumed that the information processing system 200 register the contribution value calculation SC B603 and the contribution reference weight T1 in the distributed ledger 510 and share the contribution value calculation SC B603 and the contribution reference weight T1 by the plurality of nodes, as in the SC registration processing illustrated in FIGs. 36 and 37. At this time, since the contribution reference weight T1 has been registered, the information processing system 200 may omit the processing in steps S3701 to S3714 illustrated in FIG. 37. Furthermore, it is assumed that the information processing system 200 register the contribution value calculation SC C603 and a contribution reference weight T2 in the distributed ledger 510 and share the contribution value calculation SC C603 and the contribution reference weight T2 by the plurality of nodes, as in the SC registration processing illustrated in FIGs. 36 and 37. Next, description of FIGs. 38 and 39 will be made.

Specifically, FIGs. 38 and 39 illustrate a state of the distributed ledger 510. As illustrated in FIG. 38, by the SC registration processing, the distributed ledger 510 stores the contribution value calculation SC A603, the contribution value calculation SC B603, and the contribution value calculation SC C603, in the contribution reference pool 602. As a result, the contribution value calculation SC A603, the contribution value calculation SC B603, and the contribution value calculation SC C603 can be referred by the supplier-side management device 211, the manufacturer-side management device 221, the purchaser-side management device 231, or the like.

The contribution value calculation SC A603 includes Data Type that is the record type of the actual value, Target Type that is the contribution type of the contribution value, and a calculation formula that enables to calculate the contribution value based on the actual value. The calculation formula calculates, for example, contribution value = CO₂ reduction amount. Specifically, the calculation formula is 100 - p * 2. The reference p is an actual value. The actual value is, for example, a power amount. Since the CO₂ reduction amount is larger as the power amount is smaller, the contribution value increases.

The contribution value calculation SC B603 includes Data Type that is the record type of the actual value, Target Type that is the contribution type of the contribution value, and a calculation formula that enables to calculate the contribution value based on the actual value. The calculation formula calculates, for example, contribution value = CO₂ reduction amount. Specifically, the calculation formula is 100 - p * 14. The reference p is an actual value. The actual value is, for example, the fuel amount. Since the CO₂ reduction amount is larger as the fuel amount is smaller, the contribution value increases.

The contribution value calculation SC C603 includes Data Type that is the record type of the actual value, Target Type that is the contribution type of the contribution value, and a calculation formula that enables to calculate the contribution value based on the actual value. The calculation formula calculates, for example, contribution value = plastic reduction amount. Specifically, the calculation formula is p * 2. The reference p is an actual value. The actual value is, for example, the plant-based raw material usage. Since the plastic reduction amount is larger as the usage is larger, the contribution value increases. Next, description of FIG. 39 will be made.

Specifically, FIG. 39 illustrates a state of the distributed ledger 510. As illustrated in FIG. 39, by the SC registration processing, the distributed ledger 510 stores the contribution reference weight T1 and the contribution reference weight T2 in the contribution reference weight data store 3500. As the contribution reference weight is larger, the contribution value tends to increase.

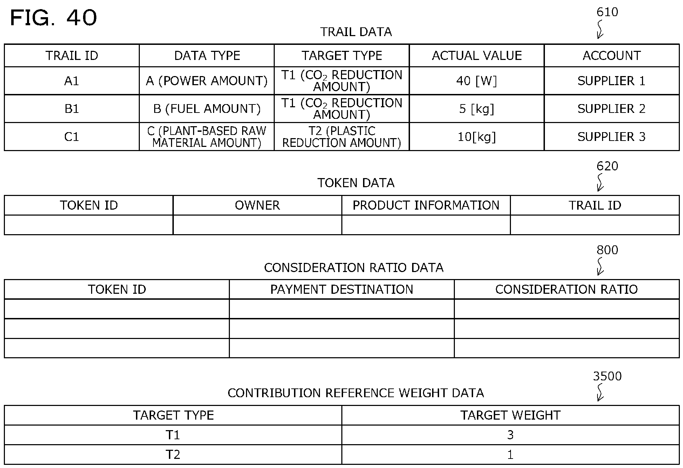

As a result, the contribution reference weight T1 and the contribution reference weight T2 can be referred by the supplier-side management device 211, the manufacturer-side management device 221, the purchaser-side management device 231, or the like. The contribution value can be calculated based on the actual value, by the supplier-side management device 211, the manufacturer-side management device 221, the purchaser-side management device 231, or the like, using the contribution reference weight. Next, description of FIG. 40 will be made.

In FIG. 40, it is assumed that the supplier-side terminal device 212 corresponding to the supplier 1 generate the trail data 1, based on the operation input of the user on the supplier side. The trail data 1 includes a trail ID = A1, a record type Data Type = A (power amount), a contribution type Target Type = T1 (CO₂ reduction amount), an actual value, and account information. It is assumed that the information processing system 200 share the trail data 1 by the plurality of nodes, as in the trail data registration processing illustrated in FIG. 11.

Furthermore, it is assumed that the supplier-side terminal device 212 corresponding to the supplier 2 generate the trail data 2, based on the operation input of the user on the supplier side. The trail data 2 includes a trail ID = B1, a record type Data Type = B (fuel amount), a contribution type Target Type = T1 (CO₂ reduction amount), an actual value, and account information. It is assumed that the information processing system 200 share the trail data 2 by the plurality of nodes, as in the trail data registration processing illustrated in FIG. 11.

Furthermore, it is assumed that the supplier-side terminal device 212 corresponding to the supplier 3 generate the trail data 3, based on the operation input of the user on the supplier side. The trail data 3 includes a trail ID = C1, a record type Data Type = C (plant-based raw material amount), a contribution type Target Type = T2 (plastic reduction amount), an actual value, and account information. It is assumed that the information processing system 200 share the trail data 3 by the plurality of nodes, as in the trail data registration processing illustrated in FIG. 11.

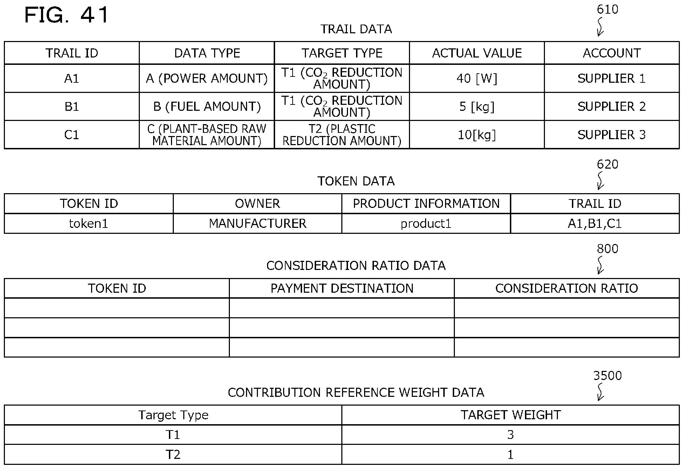

Specifically, FIG. 40 illustrates a state of the distributed ledger 510. As illustrated in FIG. 40, by the trail data registration processing, the distributed ledger 510 stores the trail data 1, the trail data 2, and the trail data 3 in the trail data store 610. As a result, the trail data 1, the trail data 2, and the trail data 3 can be referred by the supplier-side management device 211, the manufacturer-side management device 221, the purchaser-side management device 231, or the like. The supplier-side management device 211, the manufacturer-side management device 221, the purchaser-side management device 231, or the like can specify the actual value based on the trail data. Next, description of FIG. 41 will be made.

In FIG. 41, in response to production of the product, the user on the manufacturer side inputs a correspondence relationship between product information representing the product and trail IDs = A1, B1, and C1 representing trail data regarding the product, to the manufacturer-side terminal device 222. The manufacturer-side terminal device 222 generates the token 1 including the product information representing the product and the trail IDs = A1, B1, and C1 representing the trail data regarding the product. It is assumed that the information processing system 200 register the token 1 in the distributed ledger 510 and share the token 1 by the plurality of nodes, as in the token registration processing illustrated in FIG. 13.

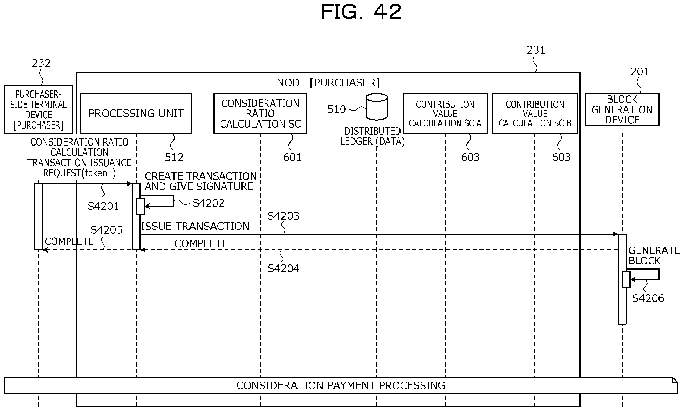

Specifically, FIG. 41 illustrates a state of the distributed ledger 510. As illustrated in FIG. 41, by the token registration processing, the distributed ledger 510 stores the token 1 in the token data store 620. As a result, the token 1 can be referred by the supplier-side management device 211, the manufacturer-side management device 221, the purchaser-side management device 231, or the like. The supplier-side management device 211, the manufacturer-side management device 221, the purchaser-side management device 231, or the like can specify the trail data to be referred when the consideration is distributed based on the token 1. Next, description of FIGs. 42 to 44 will be made.

Specifically, FIGs. 42 to 44 illustrate sequence diagrams illustrating an example of a calculation processing procedure for calculating the consideration ratio at which the consideration is distributed, in the information processing system 200. In FIG. 42, in a case where the user on the purchaser side pays a consideration for the token 1, the user inputs the token ID to the purchaser-side terminal device 232. The purchaser-side terminal device 232 generates a consideration ratio calculation request including the token ID, based on the operation input of the user on the purchaser side. In the example in FIG. 42, the purchaser-side terminal device 232 generates the consideration ratio calculation request including the token ID of the token 1.

The purchaser-side terminal device 232 transmits a consideration ratio calculation transaction issuance request including the generated consideration ratio calculation request to the purchaser-side management device 231 to be the node (step S4201). Upon receiving the consideration ratio calculation transaction issuance request, the purchaser-side management device 231 generates a consideration ratio calculation transaction including the consideration ratio calculation request and gives a signature (step S4202). The purchaser-side management device 231 issues the consideration ratio calculation transaction to the block generation device 201 (step S4203).

Upon receiving the consideration ratio calculation transaction, the block generation device 201 transmits the completion notification to the purchaser-side management device 231 (step S4204). Upon receiving the completion notification, the purchaser-side management device 231 transmits the completion notification to the purchaser-side terminal device 232 (step S4205).

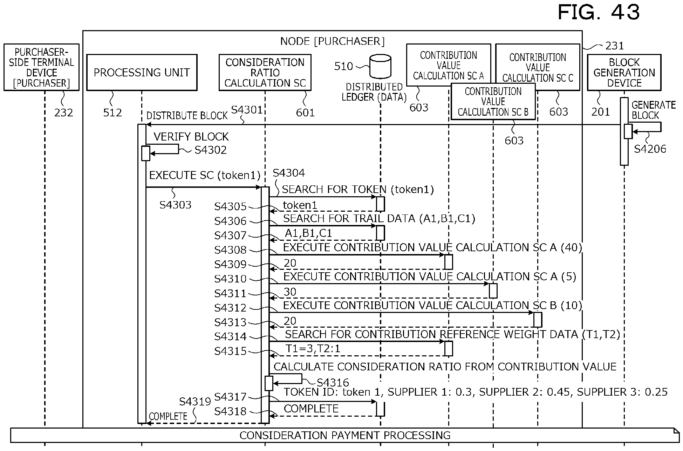

Upon receiving the consideration ratio calculation transaction, the block generation device 201 generates a block including the consideration ratio calculation request (step S4206). Next, description of FIG. 43 will be made.

In FIG. 43, the block generation device 201 distributes the generated block to the purchaser-side management device 231 (step S4301) . Upon receiving the block by the processing unit 512, the purchaser-side management device 231 verifies the received block (step S4302). When the block is verified to be valid by the processing unit 512, the purchaser-side management device 231 executes the consideration ratio calculation SC 601 and inputs a token ID included in the block to the consideration ratio calculation SC 601 (step S4303).

The purchaser-side management device 231 searches for a token corresponding to the token ID, from the token data store 620, using the token ID as a key, by the consideration ratio calculation SC 601 (step S4304). The purchaser-side management device 231 acquires the token 1, by the consideration ratio calculation SC 601 (step S4305).

The purchaser-side management device 231 searches for trail data corresponding to the trail ID, from the trail data store 610, using the trail ID included in the token 1 as a key, by the consideration ratio calculation SC 601 (step S4306). The purchaser-side management device 231 acquires the trail data 1, the trail data 2, and the trail data 3, by the consideration ratio calculation SC 601 (step S4307).

The purchaser-side management device 231 executes the contribution value calculation SC A603 corresponding to the combination of the Data Type and the Target Type, based on the trail data 1, by the consideration ratio calculation SC 601 (step S4308). The consideration ratio calculation SC 601 transfers, for example, the actual value = 40 to the contribution value calculation SC A603. The purchaser-side management device 231 acquires the contribution value = 20 calculated by the contribution value calculation SC A603, by the consideration ratio calculation SC 601 (step S4309).

The purchaser-side management device 231 executes the contribution value calculation SC B603 corresponding to the combination of the Data Type and the Target Type, based on the trail data 2, by the consideration ratio calculation SC 601 (step S4310). The consideration ratio calculation SC 601 transfers, for example, the actual value = 5 to the contribution value calculation SC B603. The purchaser-side management device 231 acquires the contribution value = 30 calculated by the contribution value calculation SC B603, by the consideration ratio calculation SC 601 (step S4311).

The purchaser-side management device 231 executes the contribution value calculation SC C603 corresponding to the combination of the Data Type and the Target Type, based on the trail data 3, by the consideration ratio calculation SC 601 (step S4312). The consideration ratio calculation SC 601 transfers, for example, the actual value = 10 to the contribution value calculation SC C603. The purchaser-side management device 231 acquires the contribution value = 20 calculated by the contribution value calculation SC C603, by the consideration ratio calculation SC 601 (step S4313).

The purchaser-side management device 231 searches for a contribution reference weight corresponding to the Target Type, from the contribution reference weight data store 3500, based on the trail data 1, the trail data 2, and the trail data 3, by the consideration ratio calculation SC 601 (step S4314). The purchaser-side management device 231 acquires the contribution reference weight T1 and the contribution reference weight T2, by the consideration ratio calculation SC 601 (step S4315).

The purchaser-side management device 231 calculates the consideration ratio for each participant, based on the acquired contribution value, by the consideration ratio calculation SC 601 (step S4316). Specifically, the purchaser-side management device 231 calculates a consideration ratio xₙ = yₙ/yₛᵤₘ * wₙ/wₛᵤₘ. The reference n is a number of a participant.

Specifically, the purchaser-side management device 231 calculates the consideration ratio of the supplier 1, 20/(20 + 30) * 3/(3 + 1) = 0.3, by the consideration ratio calculation SC 601. Specifically, the purchaser-side management device 231 calculates the consideration ratio of the supplier 2, 30/(20 + 30) * 3/(3 + 1) = 0.45, by the consideration ratio calculation SC 601. Specifically, the purchaser-side management device 231 calculates the consideration ratio of the supplier 3, 20/20 * 1/(3 + 1) = 0.25, by the consideration ratio calculation SC 601.

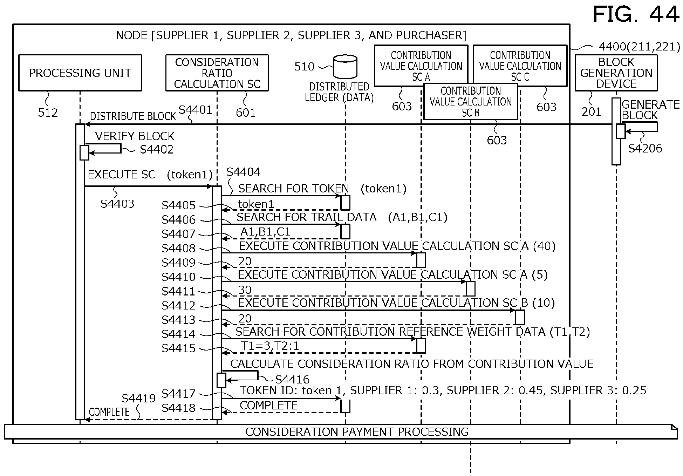

The purchaser-side management device 231 registers a correspondence relationship between the token ID and the calculated consideration ratio for each participant in the consideration ratio data store 800 of the distributed ledger 510, by the consideration ratio calculation SC 601 (step S4317). The purchaser-side management device 231 receives the completion notification from the distributed ledger 510, by the consideration ratio calculation SC 601 (step S4318). The purchaser-side management device 231 transmits the completion notification to the processing unit 512, by the consideration ratio calculation SC 601 (step S4319). Thereafter, the purchaser-side management device 231 gives the consideration for each participant, based on the consideration ratio. Next, description of FIG. 44 will be made.

In FIG. 44, the block generation device 201 distributes the generated block to various devices 4400 to be nodes (step S4401). The various devices 4400 are, for example, the manufacturer-side management device 221, the supplier-side management device 211 corresponding to the supplier 1, the supplier-side management device 211 corresponding to the supplier 2, the supplier-side management device 211 corresponding to the supplier 3, or the like.

Upon receiving the block by the processing unit 512, the various devices 4400 verify the received block (step S4402). When the block is verified to be valid, by the processing unit 512, the various devices 4400 execute the consideration ratio calculation SC 601 and input a token ID included in the block to the consideration ratio calculation SC 601 (step S4403).

The various devices 4400 search for a token corresponding to the token ID, from the token data store 620, using the token ID as a key, by the consideration ratio calculation SC 601 (step S4404). The various devices 4400 acquire the token 1, by the consideration ratio calculation SC 601 (step S4405).

The various devices 4400 search for trail data corresponding to the trail ID, from the trail data store 610, using the trail ID included in the token 1 as a key, by the consideration ratio calculation SC 601 (step S4406). The various devices 4400 acquire the trail data 1, the trail data 2, and the trail data 3, by the consideration ratio calculation SC 601 (step S4407).

The various devices 4400 execute the contribution value calculation SC A603 corresponding to the combination of the Data Type and the Target Type, based on the trail data 1, by the consideration ratio calculation SC 601 (step S4408). The consideration ratio calculation SC 601 transfers, for example, the actual value = 40 to the contribution value calculation SC A603. The various devices 4400 acquire the contribution value = 20 calculated by the contribution value calculation SC A603, by the consideration ratio calculation SC 601 (step S4409).

The various devices 4400 execute the contribution value calculation SC B603 corresponding to the combination of the Data Type and the Target Type, based on the trail data 2, by the consideration ratio calculation SC 601 (step S4410). The consideration ratio calculation SC 601 transfers, for example, the actual value = 5 to the contribution value calculation SC B603. The various devices 4400 acquire the contribution value = 30 calculated by the contribution value calculation SC B603, by the consideration ratio calculation SC 601 (step S4411).

The various devices 4400 execute the contribution value calculation SC C603 corresponding to the combination of the Data Type and the Target Type, based on the trail data 3, by the consideration ratio calculation SC 601 (step S4412). The consideration ratio calculation SC 601 transfers, for example, the actual value = 10 to the contribution value calculation SC C603. The various devices 4400 acquire the contribution value = 50 calculated by the contribution value calculation SC C603, by the consideration ratio calculation SC 601 (step S4413).

The purchaser-side management device 231 searches for a contribution reference weight corresponding to the Target Type, from the contribution reference weight data store 3500, based on the trail data 1, the trail data 2, and the trail data 3, by the consideration ratio calculation SC 601 (step S4414). The purchaser-side management device 231 acquires the contribution reference weight T1 and the contribution reference weight T2, by the consideration ratio calculation SC 601 (step S4415).

The various devices 4400 calculate the consideration ratio for each participant, based on the acquired contribution value, by the consideration ratio calculation SC 601 (step S4416). Specifically, the various devices 4400 calculate the consideration ratio of the supplier 1, 20/(20 + 30) * 3/(3 + 1) = 0.3, by the consideration ratio calculation SC 601. Specifically, the various devices 4400 calculate the consideration ratio of the supplier 2, 30/(20 + 30) * 3/(3 + 1) = 0.45, by the consideration ratio calculation SC 601. Specifically, the various devices 4400 calculate the consideration ratio of the supplier 3, 20/20 * 1/(3 + 1) = 0.25, by the consideration ratio calculation SC 601.

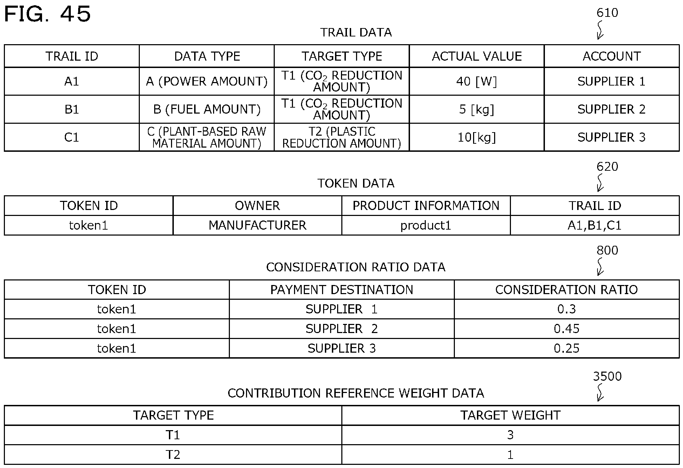

The various devices 4400 register the correspondence relationship between the token ID and the calculated consideration ratio for each participant in the consideration ratio data store 800 of the distributed ledger 510, by the consideration ratio calculation SC 601 (step S4417). The various devices 4400 receive the completion notification from the distributed ledger 510, by the consideration ratio calculation SC 601 (step S4418). The various devices 4400 transmit the completion notification to the processing unit 512, by the consideration ratio calculation SC 601 (step S4419). Thereafter, the various devices 4400 give the consideration for each participant, based on the consideration ratio. Next, description of FIG. 45 will be made.

Specifically, FIG. 45 illustrates a state of the distributed ledger 510. As illustrated in FIG. 45, by the consideration ratio calculation processing, the distributed ledger 510 stores the consideration ratio for each participant, in the consideration ratio data store 800, for the token 1. As a result, the consideration ratio can be referred by the supplier-side management device 211, the manufacturer-side management device 221, the purchaser-side management device 231, or the like. The supplier-side management device 211, the manufacturer-side management device 221, the purchaser-side management device 231, or the like can appropriately distribute the consideration, based on the consideration ratio.

In this way, the information processing system 200 can calculate a common contribution value from each of the viewpoint of the CO₂ reduction amount resulting from the power amount and the viewpoint of the CO₂ reduction amount resulting from the fuel amount. Furthermore, the information processing system 200 can calculate a common contribution value for each of the different contribution types of the CO₂ reduction amount and the plastic reduction amount. Furthermore, the information processing system 200 can selectively use the contribution reference weight, for each contribution type.

Therefore, the information processing system 200 can appropriately distribute the consideration, based on different combinations of the record types and the contribution types, in consideration of the contribution reference weight. The information processing system 200 does not need to rewrite the SC and can reduce cost. Since the information processing system 200 does not need to rewrite the SC, the information processing system 200 can easily suppress occurrence of a program bug and can improve reliability. The information processing system 200 can appropriately distribute the consideration to each participant, without affecting the existing contribution value calculation SC A603 and the consideration ratio calculation SC 601.

### (Fourth Operation Example of Information Processing System 200)

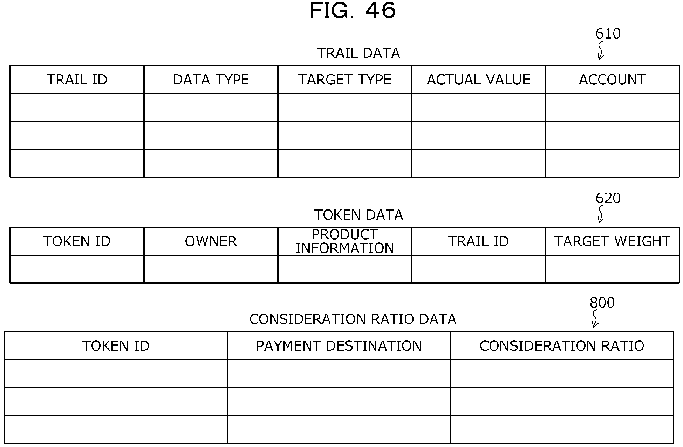

Next, a fourth operation example of the information processing system 200 will be described with reference to FIGs. 46 to 49. The fourth operation example corresponds to another pattern in a case where a different weight is applied for each contribution type. Specifically, the fourth operation example corresponds to a case where the contribution reference weight is included in the token.

FIGs. 46 to 49 are explanatory diagrams illustrating the fourth operation example of the information processing system 200. Specifically, FIG. 46 illustrates an initial state of the distributed ledger 510. As illustrated in FIG. 46, the distributed ledger 510 stores the trail data store 610, the token data store 620, and the consideration ratio data store 800. The distributed ledger 510 further stores the contribution reference weight data store 3500.

The token data store 620 further includes a field of the Target Weight. In the field of the Target Weight, "Target Weight" representing a contribution reference weight for the contribution type is set.

In the initial state, the trail data store 610 is empty. The token data store 620 is empty. The consideration ratio data store 800 is empty. Here, as in FIG. 34, it is assumed that the distributed ledger 510 store the consideration ratio calculation SC 601. It is assumed that the distributed ledger 510 include the contribution reference pool 602.

As in the SC registration processing illustrated in FIG. 9, it is assumed that the information processing system 200 register the contribution value calculation SC A603 regarding the viewpoint of the CO₂ reduction amount resulting from the power amount in the distributed ledger 510 and share the contribution value calculation SC A603 by the plurality of nodes.

Furthermore, as in the SC registration processing illustrated in FIG. 9, it is assumed that the information processing system 200 register the contribution value calculation SC B603 regarding the viewpoint of the CO₂ reduction amount resulting from the fuel amount in the distributed ledger 510 and share the contribution value calculation SC B603 by the plurality of nodes.

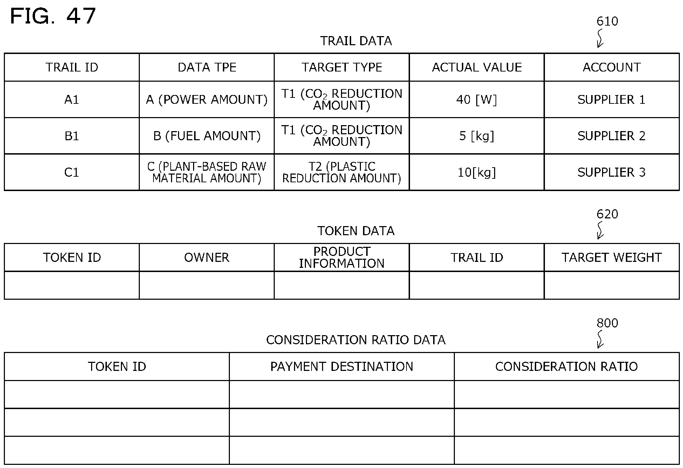

Furthermore, as in the SC registration processing illustrated in FIG. 9, it is assumed that the information processing system 200 register a contribution value calculation SC C603 regarding a viewpoint of a plastic reduction amount resulting from a plant-based raw material usage in the distributed ledger 510 and share the contribution value calculation SC C603 by the plurality of nodes. Next, description of FIG. 47 will be made.

In FIG. 47, it is assumed that the supplier-side terminal device 212 corresponding to the supplier 1 generate the trail data 1, based on the operation input of the user on the supplier side. The trail data 1 includes a trail ID = A1, a record type Data Type = A (power amount), a contribution type Target Type = T1 (CO₂ reduction amount), an actual value, and account information. It is assumed that the information processing system 200 share the trail data 1 by the plurality of nodes, as in the trail data registration processing illustrated in FIG. 11.

Furthermore, it is assumed that the supplier-side terminal device 212 corresponding to the supplier 2 generate the trail data 2, based on the operation input of the user on the supplier side. The trail data 2 includes a trail ID = B1, a record type Data Type = B (fuel amount), a contribution type Target Type = T1 (CO₂ reduction amount), an actual value, and account information. It is assumed that the information processing system 200 share the trail data 2 by the plurality of nodes, as in the trail data registration processing illustrated in FIG. 11.

Furthermore, it is assumed that the supplier-side terminal device 212 corresponding to the supplier 3 generate the trail data 3, based on the operation input of the user on the supplier side. The trail data 3 includes a trail ID = C1, a record type Data Type = C (plant-based raw material amount), a contribution type Target Type = T2 (plastic reduction amount), an actual value, and account information. It is assumed that the information processing system 200 share the trail data 3 by the plurality of nodes, as in the trail data registration processing illustrated in FIG. 11.

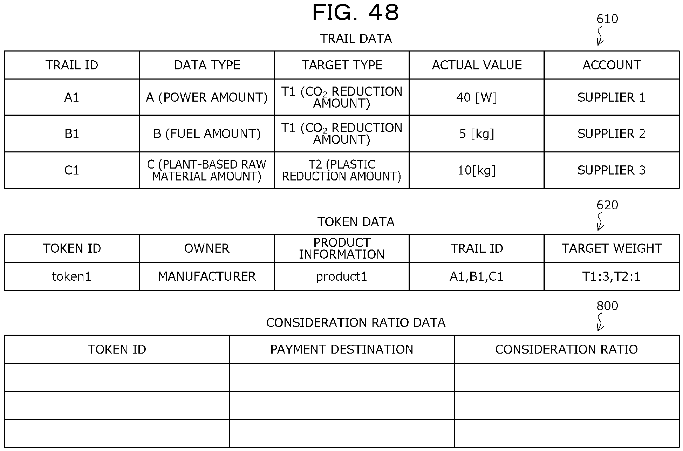

Specifically, FIG. 47 illustrates a state of the distributed ledger 510. As illustrated in FIG. 47, by the trail data registration processing, the distributed ledger 510 stores the trail data 1, the trail data 2, and the trail data 3 in the trail data store 610. As a result, the trail data 1, the trail data 2, and the trail data 3 can be referred by the supplier-side management device 211, the manufacturer-side management device 221, the purchaser-side management device 231, or the like. The supplier-side management device 211, the manufacturer-side management device 221, the purchaser-side management device 231, or the like can specify the actual value based on the trail data. Next, description of FIG. 48 will be made.

In FIG. 48, in response to production of the product, the user on the manufacturer side inputs a correspondence relationship between product information representing the product, trail IDs = A1, B1, and C1 representing trail data regarding the product, and the contribution reference weights T1 and T2, to the manufacturer-side terminal device 222. The manufacturer-side terminal device 222 generates the token 1 including the product information representing the product, the trail IDs = A1, B1, and C1 representing the trail data regarding the product, and the contribution reference weights T1 and T2. It is assumed that the information processing system 200 register the token 1 in the distributed ledger 510 and share the token 1 by the plurality of nodes, as in the token registration processing illustrated in FIG. 13.

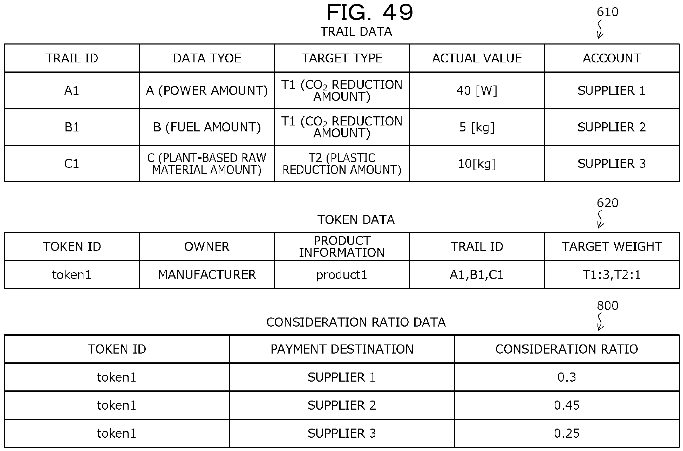

Specifically, FIG. 48 illustrates a state of the distributed ledger 510. As illustrated in FIG. 48, by the token registration processing, the distributed ledger 510 stores the token 1 in the token data store 620. As a result, the token 1 can be referred by the supplier-side management device 211, the manufacturer-side management device 221, the purchaser-side management device 231, or the like. The supplier-side management device 211, the manufacturer-side management device 221, the purchaser-side management device 231, or the like can specify the trail data to be referred when the consideration is distributed and the contribution reference weight, based on the token 1. Next, description of FIG. 49 will be made.

The information processing system 200 calculates the consideration ratio for each participant, as in the calculation processing illustrated in FIGs. 42 to 44. In this case, in step S4314, the purchaser-side management device 231 searches for the contribution reference weight corresponding to the Target Type, from the token data store 620, by the consideration ratio calculation SC 601. Similarly, in step S4414, the purchaser-side management device 231 searches for the contribution reference weight corresponding to the Target Type, from the token data store 620, by the consideration ratio calculation SC 601.

For example, specifically, various devices to be nodes calculate the consideration ratio of the supplier 1, 20/(20 + 30) * 3/(3 + 1) = 0.3. Specifically, various devices calculate the consideration ratio of the supplier 2, 30/(20 + 30) * 3/(3 + 1) = 0.45. Specifically, various devices calculate the consideration ratio of the supplier 3, 20/20 * 1/(3 + 1) = 0.25. Various devices register the correspondence relationship between the token ID and the calculated consideration ratio for each participant in the consideration ratio data store 800 of the distributed ledger 510.

Specifically, FIG. 49 illustrates a state of the distributed ledger 510. As illustrated in FIG. 49, by the consideration ratio calculation processing, the distributed ledger 510 stores the consideration ratio for each participant, in the consideration ratio data store 800, for the token 1. As a result, the consideration ratio can be referred by the supplier-side management device 211, the manufacturer-side management device 221, the purchaser-side management device 231, or the like. The supplier-side management device 211, the manufacturer-side management device 221, the purchaser-side management device 231, or the like can appropriately distribute the consideration, based on the consideration ratio.

In this way, the information processing system 200 can calculate a common contribution value from each of the viewpoint of the CO₂ reduction amount resulting from the power amount and the viewpoint of the CO₂ reduction amount resulting from the fuel amount. Furthermore, the information processing system 200 can calculate a common contribution value for each of the different contribution types of the CO₂ reduction amount and the plastic reduction amount. Furthermore, the information processing system 200 can selectively use the contribution reference weight corresponding to each contribution type, for each token. Therefore, the information processing system 200 can set the contribution reference weight with fine granularity, can easily cope with various products, and can improve convenience.

Therefore, the information processing system 200 can appropriately distribute the consideration, based on different combinations of the record types and the contribution types, in consideration of the contribution reference weight. The information processing system 200 does not need to rewrite the SC and can reduce cost. Since the information processing system 200 does not need to rewrite the SC, the information processing system 200 can easily suppress occurrence of a program bug and can improve reliability. The information processing system 200 can appropriately distribute the consideration to each participant, without affecting the existing contribution value calculation SC A603 and the consideration ratio calculation SC 601.

As described above, according to the information processing device 100, it is possible to store the first SC that converts the actual value in the process regarding the purpose into the index value indicating the contribution degree to the purpose, based on the unified criterion, according to the record type of the actual value, for each process. According to the information processing device 100, it is possible to store the second SC that calculates the ratio at which the profit obtained from the source is distributed to the plurality of participants sharing the plurality of processes, based on the index value. According to the information processing device 100, it is possible to register the first trail data indicating the correspondence relationship between any one process, the actual value in the process regarding the purpose, and the record type of the actual value, in the distributed ledger 510. According to the information processing device 100, it is possible to specify the first SC corresponding to each process, based on the token indicating the correspondence relationship between the source and the trail data registered in the distributed ledger 510 for each process, with reference to the distributed ledger 510. According to the information processing device 100, it is possible to calculate the index value regarding the process, according to the record type of the actual value in the process regarding the purpose, using the first SC specified for each process. According to the information processing device 100, it is possible to calculate the ratio at which the profit obtained from the source is distributed to the plurality of participants, according to the calculated index value regarding each process, using the second SC. As a result, the information processing device 100 can facilitate appropriate distribution of the profit obtained from the source to the plurality of participants.

According to the information processing device 100, it is possible to issue a first transaction including the first SC. As a result, the information processing device 100 can control the information processing device 100 so as to register a first block including the first SC in the distributed ledger 510 managed by each of the plurality of information processing devices 100. Therefore, the information processing device 100 can distribute the first SC to the plurality of information processing devices 100 so that the index value can be calculated.

According to the information processing device 100, it is possible to store the first SC that converts the actual value in the process regarding the purpose into the index value indicating the contribution degree to the purpose, that is the contribution type corresponding to the record type of the actual value, for each process. According to the information processing device 100, it is possible to store the second SC that calculates the ratio at which the profit obtained from the source is distributed to the plurality of participants, based on the index value of the different contribution type. According to the information processing device 100, it is possible to calculate the index value regarding the process, that is the contribution type corresponding to the record type of the actual value in the process regarding the purpose, using the first SC corresponding to each process, based on the token, with reference to the distributed ledger 510. As a result, the information processing device 100 can facilitate appropriate distribution of the profit obtained from the source to the plurality of participants, even if there are the index values of the different contribution types.

According to the information processing device 100, it is possible to calculate the ratio at which the profit obtained from the source is distributed to the plurality of participants, based on the weight for each contribution type, using the second SC. As a result, the information processing device 100 can facilitate appropriate distribution of the profit obtained from the source to the plurality of participants, in consideration of the weight for each contribution type.

According to the information processing device 100, in a case where the own device corresponds to the final process of the plurality of processes, it is possible to issue a second transaction including the token, in response to the completion of the plurality of processes. According to the information processing device 100, it is possible to control the information processing device 100 to register a second block including the token in the distributed ledger 510 managed by each of the plurality of information processing devices 100. Therefore, the information processing device 100 can distribute the token to the plurality of information processing devices 100 so that the ratio at which the profit obtained from the source is distributed to the plurality of participants can be calculated.

According to the information processing device 100, it is possible to receive a third block of designating the token and register the third block in the distributed ledger 510 managed by the own device. According to the information processing device 100, it is possible to calculate the index value regarding the process, according to the record type of the actual value in the process regarding the purpose, in response to the registration of the third block. As a result, the information processing device 100 can calculate the index value at an appropriate timing.

Note that the information processing method described in the present embodiment may be implemented by a computer such as a PC or a workstation executing a program prepared in advance. The information processing program described in the present embodiment is executed by being recorded in a computer-readable recording medium and being read from the recording medium by the computer. The recording medium is a hard disk, a flexible disk, a compact disc (CD)-ROM, a magneto optical disc (MO), a digital versatile disc (DVD), or the like. In addition, the information processing program described in the present embodiment may be distributed via a network such as the Internet.

### REFERENCE SIGNS LIST

- 100: information processing device
- 101: product
- 102 to 104: factory
- 200: information processing system
- 201: block generation device
- 210: supplier-side environment
- 211: supplier-side management device
- 212: supplier-side terminal device
- 220: manufacturer-side environment
- 221: manufacturer-side management device
- 222: manufacturer-side terminal device
- 230: purchaser-side environment
- 231: purchaser-side management device
- 232: purchaser-side terminal device
- 240: network
- 300: computer
- 301: CPU
- 302: memory
- 303: network I/F
- 304: recording medium I/F
- 305: recording medium
- 310: bus
- 400: storage unit
- 401: acquisition unit
- 402: issuance unit
- 403: registration unit
- 404: calculation unit
- 405: output unit
- 501, 511, 521: reception unit
- 502, 513, 523: transmission unit
- 503: display unit
- 510: distributed ledger
- 512: processing unit
- 522: generation unit
- 601: consideration ratio calculation SC
- 602: contribution reference pool
- 603: contribution value calculation SC
- 610: trail data store
- 620: token data store
- 630: SC store
- 800: consideration ratio data store
- 3500: contribution reference weight data store

## Claims

1. An information processing device that corresponds to any one of a plurality of processes regarding a source of a profit, of a plurality of the information processing devices that manages a distributed ledger, the information processing device comprising:
a control unit configured to
store a first smart contract that converts an actual value in the process regarding a purpose into an index value that indicates a contribution degree to the purpose, based on a unified criterion in the plurality of processes, according to a record type of the actual value, for each of the plurality of processes,
store a second smart contract that calculates a ratio at which the profit obtained from the source is distributed to a plurality of participants that shares the plurality of processes, based on the index value,
register first trail data that indicates a correspondence relationship between the any one process, the actual value in the process regarding the purpose, and the record type of the actual value, in the distributed ledger,
calculate the index value regarding the process, according to the record type of the actual value in the process regarding the purpose, by using the first smart contract that corresponds to each process, based on a token that indicates a correspondence relationship between the source and trail data registered in the distributed ledger for each process, with reference to the distributed ledger, and
calculate a ratio at which the profit obtained from the source is distributed to the plurality of participants, according to the calculated index value regarding each process, by using the second smart contract.

2. The information processing device according to claim 1, wherein
the control unit
controls the information processing device so as to register a first block that includes the first smart contract in the distributed ledger managed by each of the plurality of information processing devices, by issuing a first transaction that includes the first smart contract.

3. The information processing device according to claim 1 or 2, wherein
the control unit
stores the first smart contract that converts the actual value in the process regarding the purpose into the index value that indicates the contribution degree to the purpose, that is a contribution type that corresponds to the record type of the actual value, for each process,
stores the second smart contract that calculates the ratio at which the profit obtained from the source is distributed to the plurality of participants, based on the index value of a different contribution type, and
calculates the index value regarding the process, that is the contribution type that corresponds to the record type of the actual value in the process regarding the purpose, by using the first smart contract that corresponds to each process, based on the token that indicates the correspondence relationship between the source and the trail data registered in the distributed ledger for each process, with reference to the distributed ledger.

4. The information processing device according to claim 3, wherein
the control unit
calculates a ratio at which the profit obtained from the source is distributed to the plurality of participants, based on a weight for each contribution type, according to the index value regarding the process, that is the contribution type that corresponds to the record type of the actual value in each process regarding the purpose, by using the second smart contract.

5. The information processing device according to any one of claims 1 to 4, wherein
the control unit
controls the information processing device so as to register a second block that includes the token, in the distributed ledger managed by each of the plurality of information processing devices, by issuing a second transaction that includes the token, in response to completion of the plurality of processes, in a case where an own device corresponds to a final process of the plurality of processes.

6. The information processing device according to any one of claims 1 to 5, wherein
the control unit
receives a third block that designates the token and calculates the index value regarding the process, according to the record type of the actual value in the process regarding the purpose, by using the first smart contract that corresponds to each process, based on the token, with reference to the distributed ledger, in response to registration in the distributed ledger managed by the own device.

7. An information processing method that is executed by an information processing device corresponding to any one of a plurality of processes regarding a source of a profit among a plurality of information processing devices that manages a distributed ledger, comprising:
storing a first smart contract that converts an actual value in the process regarding a purpose into an index value that indicates a contribution degree to the purpose, based on a unified criterion in the plurality of processes, according to a record type of the actual value, for each of the plurality of processes;
storing a second smart contract that calculates a ratio at which the profit obtained from the source is distributed to a plurality of participants that shares the plurality of processes, based on the index value;
registering first trail data that indicates a correspondence relationship between the any one process, the actual value in the process regarding the purpose, and the record type of the actual value, in the distributed ledger;
calculating the index value regarding the process, according to the record type of the actual value in the process regarding the purpose, by using the first smart contract that corresponds to each process, based on a token that indicates a correspondence relationship between the source and trail data registered in the distributed ledger for each process, with reference to the distributed ledger; and
calculating a ratio at which the profit obtained from the source is distributed to the plurality of participants, according to the calculated index value regarding each process, by using the second smart contract.

8. An information processing program that is executed by an information processing device corresponding to any one of a plurality of processes regarding a source of a profit among a plurality of information processing devices that manages a distributed ledger, comprising:
storing a first smart contract that converts an actual value in the process regarding a purpose into an index value that indicates a contribution degree to the purpose, based on a unified criterion in the plurality of processes, according to a record type of the actual value, for each of the plurality of processes;
storing a second smart contract that calculates a ratio at which the profit obtained from the source is distributed to a plurality of participants that shares the plurality of processes, based on the index value;
registering first trail data that indicates a correspondence relationship between the any one process, the actual value in the process regarding the purpose, and the record type of the actual value, in the distributed ledger;
calculating the index value regarding the process, according to the record type of the actual value in the process regarding the purpose, by using the first smart contract that corresponds to each process, based on a token that indicates a correspondence relationship between the source and trail data registered in the distributed ledger for each process, with reference to the distributed ledger; and
calculating a ratio at which the profit obtained from the source is distributed to the plurality of participants, according to the calculated index value regarding each process, by using the second smart contract.
